(19) Europäisches Patentamt
European Patent Office
Office européen des brevets

(11) **EP 1 744 251 A1**

(12) **EUROPEAN PATENT APPLICATION**
published in accordance with Art. 158(3) EPC

(43) Date of publication:
**17.01.2007 Bulletin 2007/03**

(51) Int Cl.:
***G06F 15/00*** (2006.01)     ***G06K 17/00*** (2006.01)
***G06K 19/10*** (2006.01)     ***H04L 9/10*** (2006.01)
***H04L 9/32*** (2006.01)

(21) Application number: **05721398.5**

(22) Date of filing: **24.03.2005**

(86) International application number:
**PCT/JP2005/005384**

(87) International publication number:
**WO 2005/098639 (20.10.2005 Gazette 2005/42)**

(84) Designated Contracting States:
**AT BE BG CH CY CZ DE DK EE ES FI FR GB GR HU IE IS IT LI LT LU MC NL PL PT RO SE SI SK TR**

(30) Priority: **01.04.2004 JP 2004109111**

(71) Applicant: **KABUSHIKI KAISHA TOSHIBA**
**Tokyo 105-8001 (JP)**

(72) Inventors:
 • **KASAHARA, Akihiro**
 **Minato-ku,**
 **Tokyo 105-8001 (JP)**
 • **MIURA, Akira**
 **Minato-ku,**
 **Tokyo 105-8001 (JP)**

 • **SUU, Hiroshi**
 **Minato-ku,**
 **Tokyo 105-8001 (JP)**
 • **ISHIDA, Shigeru**
 **Minato-ku,**
 **Tokyo 105-8001 (JP)**
 • **NAKANO, Kazunori**
 **Minato-ku, Tokyo 105-8001 (JP)**

(74) Representative: **Henkel, Feiler & Hänzel**
**Patentanwälte**
**Maximiliansplatz 21**
**80333 München (DE)**

(54) **LOG IN SYSTEM AND METHOD**

(57)     One aspect of the present invention is to provide a login system and method which can be easily applied to corporate members, and which can prevent unauthorized use even if authentication information is copied. Because of a configuration in which login is carried out by using service right data (p11) for each medium identifier (SD-ID01) of a secure storage medium (SD), unless a dishonest person uses the secure storage medium (SD), it is impossible to log in even if the dishonest person copies authentication information. Further, provided that the secure storage medium is distributed to every signal person belonging to a corporate body, it can be applied to corporate users in the same way as individual users.

FIG. 1

EP 1 744 251 A1

**Description**

Technical Field

The present invention relates to a login system and method to log in to a service provider apparatus from a user terminal, and more specifically, to a login system and method which can be easily applied to corporate members, and which can prevent unauthorized use even if authentication information is copied.

Background Art

In recent years, along with the popularization of network communication represented by the Internet or the like, a form in which a service provider manages a home page, and provides various services such as database (DB) searching to users who have accessed to the home page.

As such a service providing form, login processing in which it is determined whether or not a user who has subscribed in advance is a member at the time of login from a user terminal, and a form in which various services are provided in accordance with an operation of a user who has been authenticated as a member as a result of login processing have been broadly known.

Further, such a form is not limited to a case in which a user is an individual. For example, in a case of a corporate member that a company is subscribed, a form in which a membership fee is paid in accordance with a number of company members who receive service offer has been known.

Here, login processing includes a form in which a user ID and a password for each individual or each corporate body are requested to a user terminal, a user ID and a password received by return are collated with a user ID and a password registered in advance, and an individual or a corporate body is authenticated as a member when the both are the same.

However, in login processing as described above, the following problems (i) and (ii) are known.

(i) There is a possibility that a user ID and a password are copied along the way of communication to be improperly used.
(ii) In a case of a corporate member, it is almost impossible to impartially determine a number of company members receiving service offer. When there is even an error of one person in the number of company members, one of the company and the service provider is of benefit, and the other one makes a loss, which may be an unfair arrangement in most cases.

Disclosure of Invention

As described above, in the conventional login processing, there is a possibility that authentication information such as a user ID or a password is copied to be improperly used. Further, it is difficult to apply to corporate members.

An object of the present invention is to provide a login system and method which can be easily applied to a corporate member, and which can prevent unauthorized use even if authentication information is copied.

According to a first aspect of the present invention, there is provided a login system to log in to a service provider apparatus from a user terminal which detachably holds a secure storage medium having a medium identifier stored therein, wherein the secure storage medium comprises: a key area in which service cipher keys issued on the basis the medium identifier are stored; and a data area in which encrypted service right data obtained by encrypting service right data by means of the service cipher keys are stored, the user terminal comprises: a device configured to read a medium identifier from the secure storage medium at the time of the login; a device configured to transmit the read medium identifier and a login request to the service provider apparatus; a device configured to read the service cipher key and the encrypted service right data from the secure storage medium on the basis of the transmission; a device configured to decrypt the encrypted service right data on the basis of the service cipher key; a device configured to transmit the decrypted service right data to the service provider apparatus; and a device configured to terminate the login when an access is permitted from the service provider apparatus by the transmission, and the service provider apparatus comprises: a storage device having service right data stored therein for each medium identifier; a device configured to read corresponding service right data in the storage device on the basis of a medium identifier and a login request received from the user terminal; a collating device configured to, when service right data is received from the user terminal, collate the service right data with the read service right data; and a device configured to, when the both are the same as a result of the collation, permit an access of the user terminal on the basis of the service right data.

Accordingly, in accordance with the first aspect, a configuration is provided in which login is carried out by using service right data with respect to each medium identifier of a secure storage medium. Therefore, unless a dishonest person uses a secure storage medium, it is impossible to log in even if the dishonest person copies authentication information. Further, provided that a secure storage medium is distributed to every person belonging to a corporate, it can be applied to corporate users in the same way as individual users. Namely, it is possible to provide a login system which can be easily applied to corporate members, and which can prevent unauthorized use even if authentication information is copied.

According to a second aspect of the present invention, there is provided a login system to log in to a service provider apparatus from a user terminal which detachably holds a secure storage medium having a medium identifier stored therein, wherein the secure storage medium comprises: a key area in which a service cipher key corresponding to a medium identifier is stored; and a data area in which encrypted function designating data obtained by encrypting latest function designating data by means of the service cipher key are stored, the user terminal comprises: a device configured to read a medium identifier from the secure storage medium at the time of the login; a device configured to transmit the read medium identifier and a login request to the service provider apparatus; a device configured to receive encrypted time login information and a service identifier from the service provider apparatus by the transmission; a device configured to read a service cipher key and the encrypted function designating data on from the secure storage medium on the basis of the service identifier; a device configured to decrypt the encrypted function designating data and the encrypted time login information on the basis of the service cipher key; a device configured to calculate a first function value by substituting the decrypted time login information for a function obtained from the decrypted function designating data; a device configured to transmit the first function value to the service provider apparatus; and a device configured to terminate the login when an access is permitted from the service provider apparatus by the transmission, and the service provider apparatus comprises: a storage device in which service cipher key corresponding to a service identifier and function designating data are stored so as to be associated with each other for each medium identifier; a device configured to, when a medium identifier and a login request are received from the user terminal, read service identifier corresponding to the medium identifier, service cipher key, and function designating data with reference to the storage device; a device configured to calculate a second function value by substituting time login information associated with a clock time when the login request is received for a function obtained from the function designating data; a device configured to encrypt the time login information by the service cipher key; a device configured to send back the encrypted time login information obtained by the encrypting and the read service identifier to the user terminal; a collating device configured to, when a first function value is received from the user terminal, collate the first function value and the second function value; and a device configured to, when the both are the same as a result of the collation, permit an access of the user terminal.

Accordingly, in accordance with the second aspect, a configuration is provided in which login is carried out by using first and second function values calculated on the basis of function designating data with respect to each medium identifier of a secure storage medium. Therefore, unless a dishonest person uses a secure storage medium, it is impossible to log in even if the dishonest person copies authentication information. Further, provided that a secure storage medium is distributed to every person belonging to a corporate, it can be applied to corporate users in the same way as individual users. Namely, it is possible to provide a login system which can be easily applied to corporate members, and which can prevent unauthorized use even if authentication information is copied.

Note that, in the respective aspects of the invention, the aggregate of the respective devices is expressed as a "system". However, the invention is not limited thereto, and it goes without saying that each of the respective devices or the aggregate of the respective devices may be expressed as an "apparatus", a "system", a "method", a "computer-readable storage medium", or a "program".

Brief Description of Drawings

FIG. 1 is a schematic diagram showing a configuration of a login system according to a first embodiment of the present invention.
FIG. 2 is a schematic diagram showing a configuration of a service DB table in the embodiment.
FIG. 3 is a schematic diagram showing a configuration of a right DB table in the embodiment.
FIG. 4 is a schematic diagram showing a configuration of the both tables in the embodiment.
FIG. 5 is a schematic diagram showing a configuration of a personal identification number table in the embodiment.
FIG. 6 is a sequence diagram for explanation of operations in the embodiment.
FIG. 7 is a sequence diagram for explanation of operations in the embodiment.
FIG. 8 is a sequence diagram for explanation of operations in the embodiment.
FIG. 9 is a schematic diagram for explanation of operations in the embodiment.
FIG. 10 is a sequence diagram for explanation of operations in the embodiment.
FIG. 11 is a sequence diagram for explanation of operations in the embodiment.
FIG. 12 is a schematic diagram for explanation of operations in the embodiment.
FIG. 13 is a schematic diagram for explanation of operations in the embodiment.
FIG. 14 is a sequence diagram for explanation of operations in the embodiment.
FIG. 15 is a schematic diagram showing a configuration of a secure storage medium which is applied to a login system according to a second embodiment of the present invention.
FIG. 16 is a schematic diagram showing a modified example of the secure storage medium in the embodiment.
FIG. 17 is a schematic diagram showing a modified example of the secure storage medium in the embodiment.

FIG. 18 is a schematic diagram showing a configuration of a service DB table in the embodiment.

FIG. 19 is a schematic diagram showing a modified example of the service DB table in the embodiment.

FIG. 20 is a schematic diagram showing a modified example of the service DB table in the embodiment.

FIG. 21 is a sequence diagram for explanation of operations in the embodiment.

FIG. 22 is a schematic diagram showing a configuration of a secure storage medium which is applied to a login system according to a third embodiment of the present invention.

FIG. 23 is a schematic diagram showing a configuration of a right DB table in the embodiment.

FIG. 24 is a sequence diagram for explanation of operations in the embodiment.

FIG. 25 is a sequence diagram for explanation of operations in the embodiment.

FIG. 26 is a sequence diagram for explanation of operations in the embodiment.

FIG. 27 is a schematic diagram showing a configuration of a login system according to a fourth embodiment of the present invention.

FIG. 28 is a schematic diagram showing a configuration of a service DB table in the embodiment.

FIG. 29 is a sequence diagram for explanation of operations in the embodiment.

FIG. 30 is a schematic diagram showing a first configuration of a service DB table in a modified example of the embodiment.

FIG. 31 is a schematic diagram showing a second configuration of the service DB table in the modified example of the embodiment.

FIG. 32 is a schematic diagram showing a third configuration of the service DB table in the modified example of the embodiment.

FIG. 33 is a sequence diagram for explanation of operations in the modified example of the embodiment.

FIG. 34 is a sequence diagram for explanation of operations in another modified example of the embodiment.

Best Mode for Carrying Out the Invention

Hereinafter, respective embodiments of the present invention will be described with reference to the drawings.

(First Embodiment)

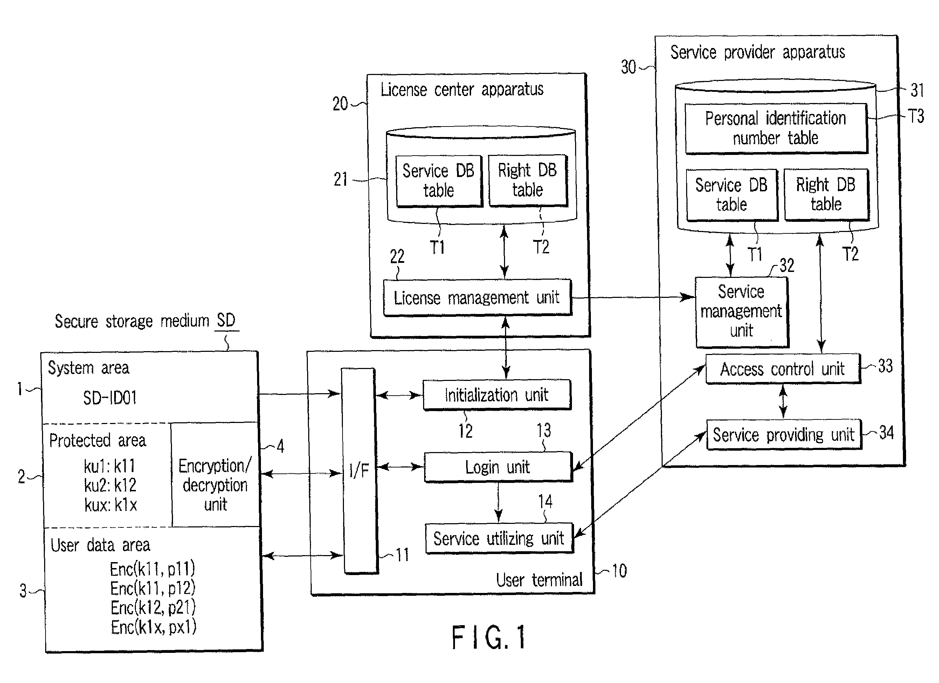

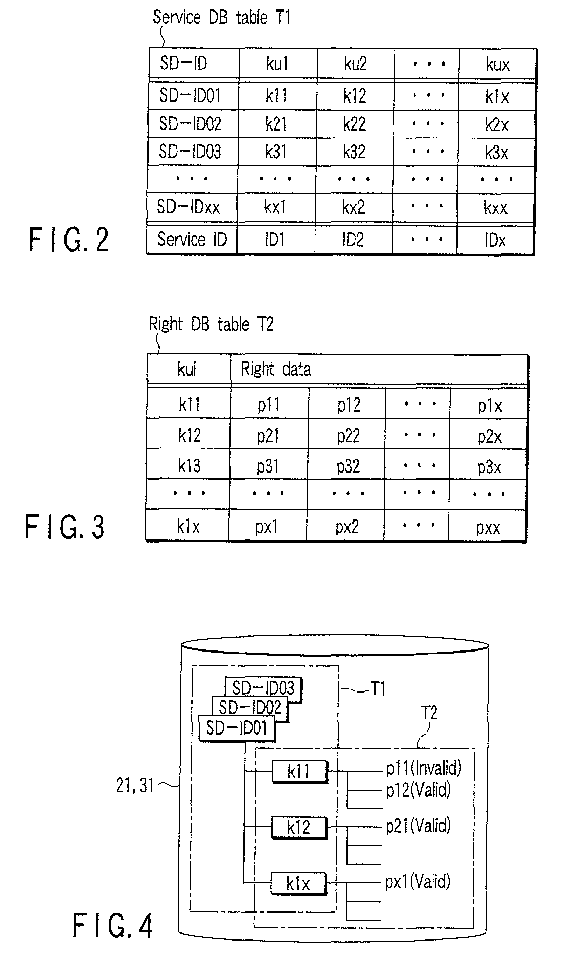

FIG. 1 is a schematic diagram showing a configuration of a login system according to a first embodiment of the present invention, and FIGS. 2 to 5 are schematic diagrams showing configurations of respective tables applied to the system. The login system has a secure storage medium SD, a user terminal 10, a license center apparatus 20, and a service provider apparatus 30. Here, the apparatuses SD, 10, 20, and 30 each are constituted by a plurality of devices for realizing respective functions of the apparatuses. The respective devices may be realized as hardware configurations, or may be realized as combinations of hardware configurations and software configurations.

The secure storage medium SD is a secure storage medium which has a medium identifier SD-ID01 unique to the medium, and from/in which data issued (encrypted) on the basis of the medium identifier SD-ID01 are read/written. For example, an SD memory card can be used as the secure storage medium SD, and it has a system area 1, a protected area 2, a user area 3, and an encryption/decryption unit 4.

The system area 1 is an area which can be read by only an interface unit 11 of the regular user terminal 10, and a medium identifier SD-ID01 serving as identification information unique to the medium is stored thereon.

The protected area (key area) 2 is an area from which general users cannot directly read data. Service cipher keys $k11$, $k12$, and $klx$ corresponding to a service identifier are stored in the protected area 2, and it is possible to access to the protected area 2 from the regular user terminal 10 via mutual authentication by the encryption/decryption unit 4.

The user area (data area) 3 is an area from which general users can directly read data. In the user area 3, encrypting service right data $Enc(k11, p11)$, $Enc(k11, p12)$, $Enc(k12, p21)$, and $Enc(k1x, px1)$ obtained by encrypting service right data $p11$, $p12$, $p12$, and $px1$ by the service cipher keys $k11$, $k12$, and $k1x$ are stored. Note that, in this specification, the notation of $Enc(A, B)$ means encrypted B data obtained by encrypting data B by a key A. The notation of $k1x$ is composed of k denoting a service cipher key, 1 denoting SD-ID01, and x denoting a service IDx, and denotes a service cipher key uniquely determined on the basis of a medium identifier and a service identifier. In the same way, the notation of $px1$ is composed of p denoting service right data, x denoting a service IDx, and 1 denoting SD-ID01, and denotes service right data uniquely determined on the basis of a medium identifier and a service identifier. Here, the service right data $p11$ is information periodically updated, and includes at least update schedule information (for example, update schedule date or expiration date, etc.).

The encryption/decryption unit 4 is to control an access from the user terminal 10 serving as an external device to the protected area 2, and to encrypt read/write data flowing between the both by a session key Ks.

Specifically, the encryption/decryption unit 4 has a function of executing mutual authentication with the user terminal 10 to share a session key Ks in order to control an access, and a function of enabling the protected area 2 to be accessed from the user terminal 10 in a case of succeeding in mutual authentication.

The secure storage medium SD as described above may be for exclusive use by a specific service provider, or may be for common use among a plurality of service providers. For example, in a case of common use among a plurality of service providers, service cipher keys k11, k21, ... corresponding to the plurality of service providers may be stored in the protected area 2.

The user terminal 10 has normal personal computer functions, and in particular, is constituted by a software for login installed in the computer serving as the user terminal 10 in advance, and a memory (not shown) which is operated by the software, for temporarily storing one function of a CPU and processed results. The user terminal 10 has the interface unit 11, an initialization unit 12, a login unit 13, and a service utilizing unit 14.

The interface unit 11 is an interface equipment between the secure storage medium SD and the respective units 12 and 13, and for example, a card reader/wrier can be used. Note that, to simplify the description, description of the effect that the interface unit 11 is provided between the secure storage medium SD and the respective units 12 and 13 will be omitted in the following descriptions.

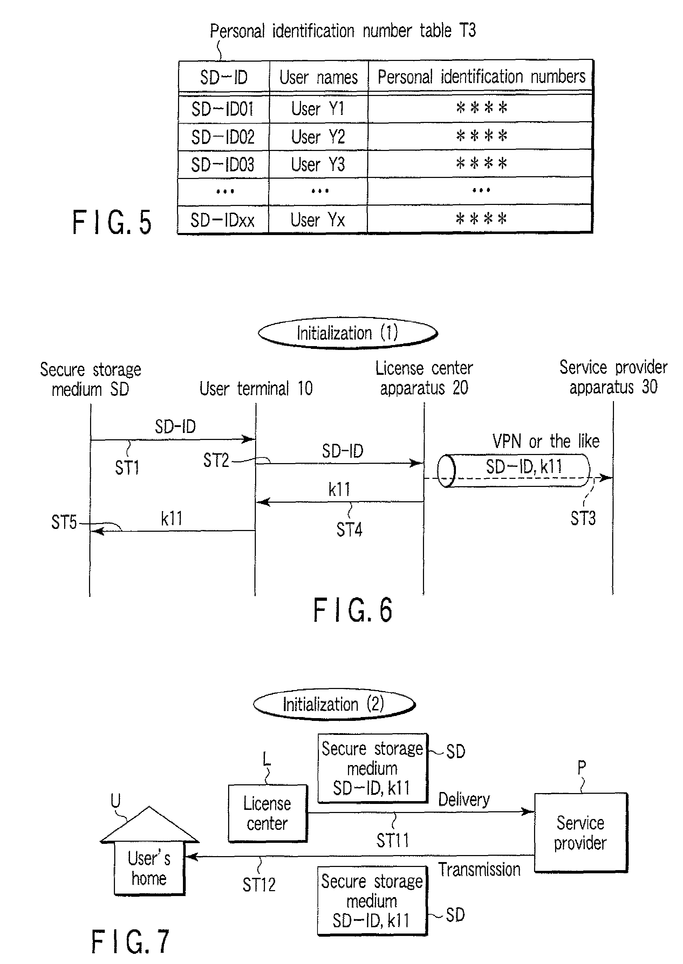

The initialization unit 12 is to execute initialization processing for the secure storage medium, and for example, has the following functions (f12-1) to (f12-3) as shown in FIG. 6 to be described later.

(f12-1) Function of reading the medium identifier SD-ID01 from the secure storage medium SD.
(f12-2) Function of transmitting the medium identifier SD-ID01 to the license center apparatus 20.
(f12-3) Function of enabling communication between the license center apparatus 20 and the secure storage medium SD by being provided therebetween.

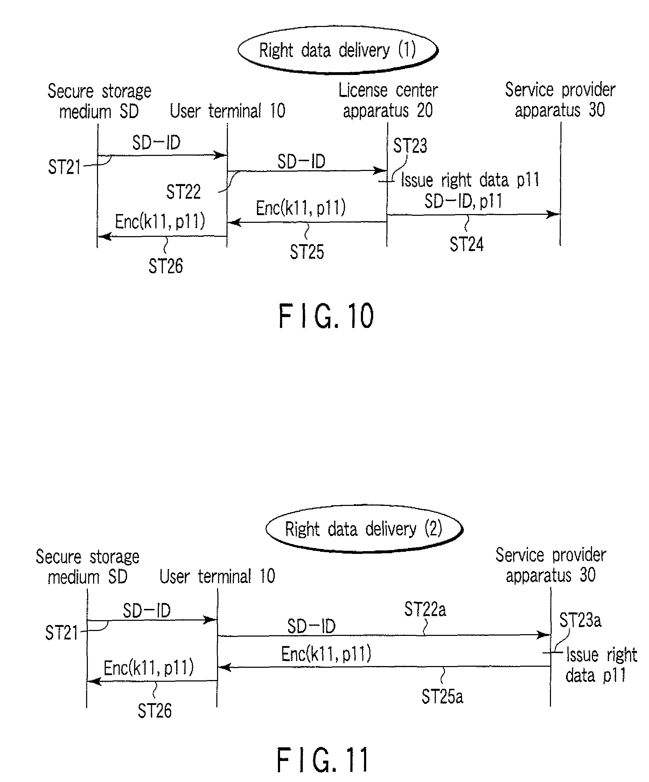

The login unit 13 is to execute right data delivery processing and login processing after the initialization processing by the initialization unit 12 is completed. For example, in a case of right data delivery processing, the login unit 13 has the following functions (f13-1) to (f13-2) as shown in FIG. 10 or FIG. 11 to be described later.

(f13-1) Function of reading the medium identifier SD-ID01 from the secure storage medium SD, and of transmitting the medium identifier SD-ID01 to the license center apparatus 20 or the service provider apparatus 30.
(f13-2) Function of writing encrypted service right data Enc(k11, p11) sent back into the user data area 3 of the secure storage medium SD.

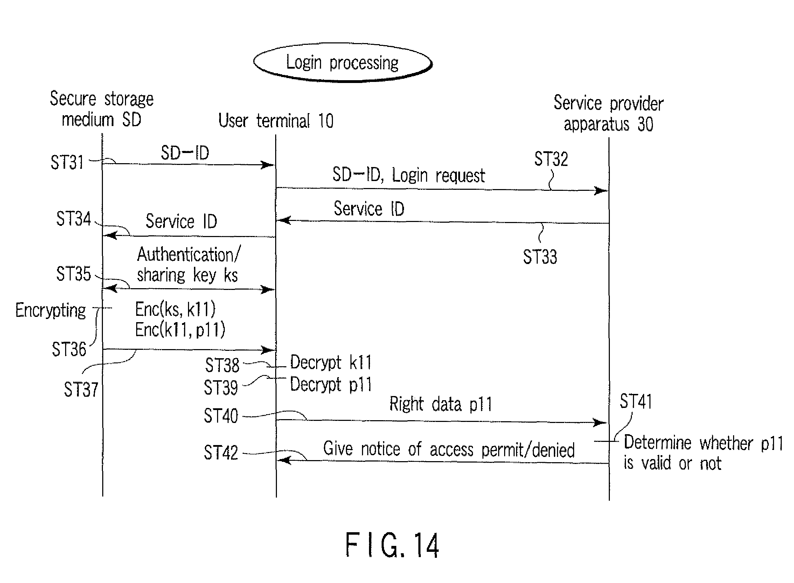

Further, in a case of login processing, the login unit 13 has the following functions (f13-3) to (f13-8) as shown in FIG. 14 to be described later.

(f13-3) Function of reading the medium identifier SD-ID01 from the secure storage medium SD, and of transmitting the medium identifier SD-ID01 and a login request to the service provider apparatus 30.
(f13-4) Function of inputting the service identifier ID1 sent back into the secure storage medium SD, and of sharing the session key Ks with the secure storage medium SD.
(f13-5) Function of decrypting an encrypted service cipher key Enc(ks, k11) by the session key Ks when the encrypted service cipher keys and encrypted service right data are read from the secure storage medium SD.
(f13-6) Function of decrypting the encrypted service right data Enc(k11, p11) on the basis of the decrypted service cipher key k11, and of transmitting the obtained service right data p11 to the service provider apparatus 30.
(f13-7) Function of terminating the login when a notice of access permit or access denied is received in reply.
(f13-8) Function of starting the service utilizing unit 34 in a case of access permit.

The service utilizing unit 14 is to utilize services provided from the service provider apparatus 30 after login processing by the login unit 13 is completed.

The license center apparatus 20 has a storage device 21 and a license management unit 22.

The storage device 21 is to store a service DB table T1 and a right DB table T2 therein so as to be readable from/writable into the license management unit 22.

In the service DB table T1, service cipher keys k11, k12, ... corresponding to a service identifier ID are stored so as to be associated with each of medium identifiers SD-ID1, 2, ..., as shown in FIG. 2. Note that the notation of "kux" is composed of k denoting a service cipher key, u denoting SD-IDu, and x denoting service IDx, and denotes a service cipher key uniquely determined on the basis of a medium identifier and a service identifier.

In the service DB table T2, service cipher keys k11, k12, ..., and service right data p11, p21, ... which are periodically updated are stored so as to be associated with each other, as shown in FIG. 3. Here, service right data p11, p21, ... in the following period are delivered from the license center apparatus 20 or the service provider apparatus 30 before the expiration date of the service right data p11, p21, ... currently in use expires. Specifically, the delivery is executed, for example, by the license management unit 22 or a service management unit 32. Further, in some cases, the service right data p11, .... are not updated periodically, such as, for example, data relating to a limited time service.

Note that the both tables T1 and T2 can function as one table, and as shown in FIG. 4, the service cipher keys k11, k12, ... corresponding to a service identifier ID, and the service right data p11, p12, ... are stored so as to be associated with each other for each medium identifier SD-ID.

The license management unit 22 executes at least initialization processing, and executes service right data delivery processing as needed. The license management unit 22 has, for example, the following functions (f22-1) to (f22-3) with respect to initialization processing.

(f22-1) Function of generating a service cipher key k11 so as to correspond to a service identifier for each medium identifier SD-ID01 received from the user terminal 10, and of writing it into the storage device 21.
(f22-2) Function of delivering the medium identifier SD-ID01 and the service cipher key k11 to the service provider apparatus 30.
(f22-3) Function of delivering the service cipher key k11 to the user terminal 10 via secure communication.

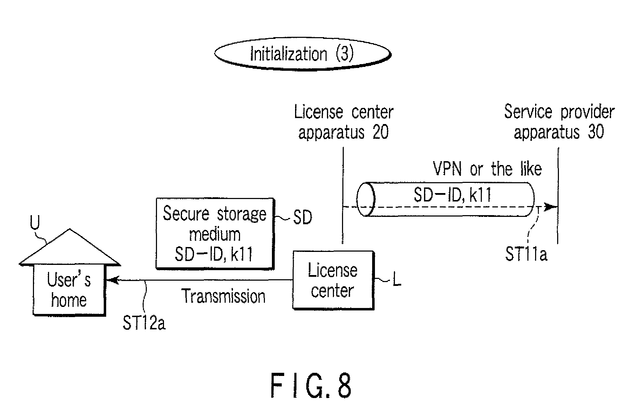

The service provider apparatus 30 has a storage device 31, the service management unit 32, an access control unit 33, and a service providing unit 34.
The storage device 31 is to store the service DB table T1, the right DB table T2, and a personal identification number table T3 therein so as to be readable from/writable into the service management unit 32 and the access control unit 33.
The service DB table T1 and the right DB table T2 are the same as described above. The personal identification number table T3 is, as shown in FIG. 5, that user IDs and personal identification numbers are stored for each medium identifier SD-ID. The personal identification number table T3 is to protect the secure storage medium SD from unauthorized use by carrying out a normal password authentication even when, for example, the secure storage medium SD is missing. However, even if the personal identification number table T3 is omitted, the service right data p11, ... are periodically updated, and thus, the damage at the time of missing the secure storage medium SD can be kept to the minimum.
The service management unit 32 executes at least initialization processing, and executes service right data delivery processing as needed. In a case of initialization processing, the service management unit 32 has a function of storing the medium identifier SD-ID01 received from the license center apparatus 20 and the service cipher keys k11 so as to be associated with each other in the service DB table T1 in the storage device 31, as shown in FIG. 6 or FIG. 8 to be described later.
In addition, in a case of service right data delivery processing, the service management unit 32 has the following functions (f32-1) to (f32-2), as shown in FIG. 10 or FIG. 11 to be described later.

(f32-1) Function of storing the service right data p11 in the right DB table T2 in the storage device 31 when the service right data p11 and the medium identifier SD-ID01 are received from the license center apparatus 20.

(f32-2) Function of, when the medium identifier SD-ID01 is received from the user terminal 10, encrypting the service right data p11 by the cipher key k11 in the storage device 31, and of delivering the obtained encrypted service right data Enc(k11, p11) to the user terminal 10.

The access control unit 33 executes login processing after initialization processing or service right data delivery processing by the service management unit 32 is completed, and executes access control with respect to the user terminal 10 in accordance with the result. The access control unit 33 has the following functions (f33-1) to (f33-4) with respect to login processing, as shown in FIG. 14 to be described later.

(f33-1) Function of, when the medium identifier SD-ID01 and a login request are received from the user terminal 10, sending back the service identifier ID1 corresponding to the medium identifier SD-ID01 with reference to the respective tables T1 and T2 of the storage device 31.
(f33-2) Function of collating the service right data p11 received from the user terminal 10 with the corresponding latest service right data p11 in the storage device 31.
(f33-3) Function of, when the both are the same as a result of the collation, determining whether or not the service right data p11 is valid on the basis of the update schedule information in the service right data p11.
(f33-4) Function of giving notice of access denied to the user terminal 10 when the result of determination shows the invalidity, and of giving notice of access permit to the user terminal 10 when the result of determination shows the validity.

The service providing unit 34 is to provide predetermined services to the user terminal 10 to which an access is permitted by the access control unit 33.
Next, operations of the login system configured as described above will be described by using sequence diagrams or schematic diagrams of FIGS. 6 to 14.

(Initialization Processing)

Now, a mobile secure storage medium SD is loaded into the interface unit 11 of the user terminal 10 by an operator.
Subsequently, initialization processing is executed by an operation of the operator in the user terminal 10. Specifically, as shown in FIG. 6, the user terminal 10 reads the medium identifier SD-ID01 from the secure storage medium SD (ST1), and transmits this medium identifier SD-ID01 to the license center apparatus 20 (ST2).
In the license center apparatus 20, the service cipher key k11 is generated so as to correspond to a service identifier for each medium identifier SD-ID01 received, and is written into the storage device 21 by the license management unit 22. Next, the license management unit 22 delivers the medium identifier SD-ID01 and the service cipher key k11 to the service provider apparatus 30 by a secure communication technology such as a virtual private network (VPN) (ST3). The service provider apparatus 30 stores the medium identifier SD-ID01 and service cipher key k11 so as to be associated with each other in the service DB table T1 in the storage device 31.

Next, the license center apparatus 20 delivers the service cipher key k11 to the user terminal 10 by a secure communication technology such as a secure sockets layer (SSL) (ST4).

The user terminal 10 stores the delivered service cipher key k11 in the protected area 2 of the secure storage medium SD via the encryption/decryption unit 4 (ST5).

As described above, the initialization processing is completed. Note that the initialization processing may include processing for registering user IDs and personal identification numbers in the personal identification number table T3 of the service provider apparatus 30 as needed.

Further, the initialization processing is not limited to, as shown in FIG. 6, a case of initializing a secure storage medium SD prepared by a user, and as shown in FIG. 7 or FIG. 8, may be a form in which a license center L delivers an initialized secure storage medium SD to a user's home U. FIG. 7 shows a case in which an initialized secure storage medium SD is delivered to the user's home U via a service provider P, and FIG. 8 shows a case in which an initialized secure storage medium SD is directly delivered to the user's home U.

In the case shown in FIG. 7, the license center L delivers the initialized secure storage medium SD to the service provider P (ST11). Further, the license center L separately sends table data of the medium identifier SD-ID01 and the service cipher key k11 to the service provider P. The service provider P reads the medium identifier SD-IDOI and the service cipher key K11 from the sent table data, writes those into the respective tables T1 and T2 of the storage device 31, and then, delivers the secure storage medium SD to the user's home U (ST12).

Further, in the case shown in FIG. 8, the license center L transmits the medium identifier SD-ID01 and the service cipher key k11 which have been obtained by initialization to the service provider apparatus 30 (ST11a). The service provider apparatus 30 writes the medium identifier SD-ID01 and service cipher key k11 into the respective tables T1 and T2 of the storage device 31. Thereafter, the license center L delivers the initialized secure storage medium SD to the user's home U (ST12a).

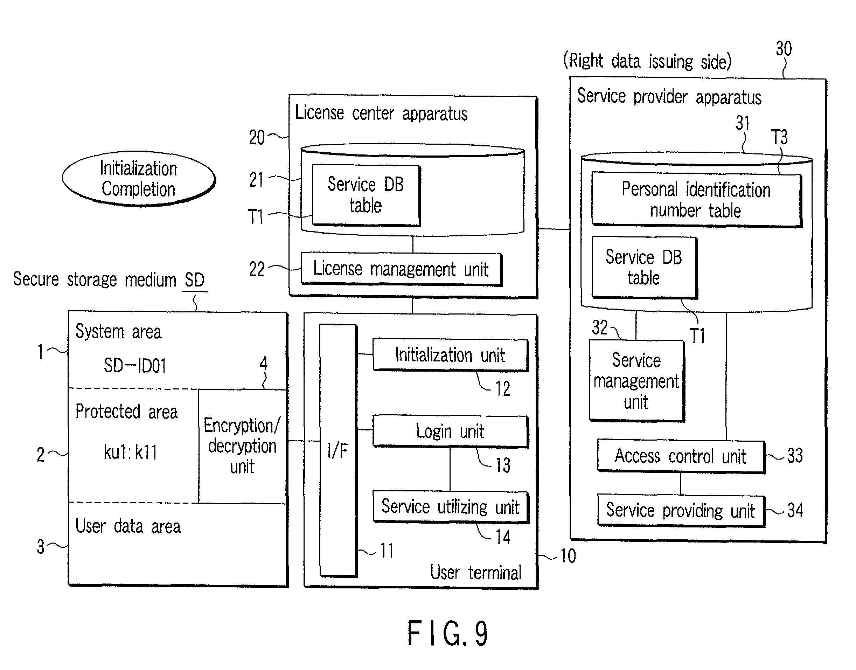

In any of the forms of FIGS. 6 to 8 described above, the initialization processing is completed in the same way. The states of the respective apparatuses SD, 20, and 30 at the time of completing the initialization processing are as shown in FIG. 9. Namely, in addition to the medium identifier SD-ID01 in the system area 1 from the time of manufacturing, the service cipher key k11 has been stored in the protected area 2 in the secure storage medium SD by initialization processing.

In the license center apparatus 20, the medium identifier SD-ID01 of the secure storage medium SD and the service cipher key k11 are written into the service DB table T1 in the storage apparatus 21. In the service provider apparatus 30, the medium identifier SD-ID01 of the secure storage medium SD and the service cipher key k11 are written into the service DB table T1 in the storage device 31, and the personal identification number table T3 is written as needed.

Namely, the respective apparatuses 20 and 30 have the service cipher keys k11 relating to the secure storage medium SD at the time of completing the initialization, but do not have the service right data p11.

Now, service right data delivery processing will be described.

(Service right data delivery processing)

In the same way as described above, suppose that the secure storage medium SD is loaded into the user terminal 10.

In the user terminal 10, as shown in FIG. 10, the medium identifier SD-ID01 is read from the secure storage medium SD (ST21), and the medium identifier SD-ID01 is transmitted to the license center apparatus 20 (ST22) by an operation of an operator.

In the license center apparatus 20, the service right data p11 is issued so as to correspond to a service identifier for each medium identifier SD-ID01 received (ST23), and is written into the storage device 21 by the license management unit 22. Next, the license management unit 22 encrypts the service right data p11 on the basis of the medium identifier SD-ID01 and service cipher key k11 corresponding to the service identifier.

Thereafter, the license center apparatus 20 delivers the service right data p11 before encrypting and the medium identifier SD-IDOI to the service provider apparatus 30 (ST24). In step ST24, encrypted communication such as VPN or SSL may be used from the standpoint of ensuring security. This is the same as those in steps ST24f and ST24'.

Subsequently, the license center apparatus 20 delivers the encrypted service right data Enc(k11, p11) to the user terminal 10 (ST25). The user terminal 10 writes the encrypted service right data Enc(k11, p11) into the user data area 3 of the secure storage medium SD (ST26).

As described above, the right data delivery processing is completed. Note that the right data delivery processing is not limited to, as shown in FIG. 10, a case in which the license center apparatus 20 issues the service right data p11, and as shown in FIG. 11, the service provider apparatus 30 may issue the service right data p11.

In the case shown in FIG. 11, the user terminal 10 delivers the medium identifier SD-ID01 to the service provider apparatus 30 after step ST21 (ST22a).

In the service provider apparatus 30, the service right data p11 is issued so as to correspond to a service identifier for each medium identifier SD-ID01 received (ST23a), and is written into the storage device 31 by the service management unit 32. Next, the service management unit 32 encrypts the service right data p11 on the basis of the medium identifier SD-ID01 and the service cipher key k11 corresponding to the service identifier.

Thereafter, the service management unit 32 delivers the service right data Enc(k11, p11) obtained by encrypting, to the user terminal 10 (ST25a). The user terminal 10 writes the encrypted service right data Enc (k11, p11) into the user data area 3 of the secure storage medium SD (ST26).

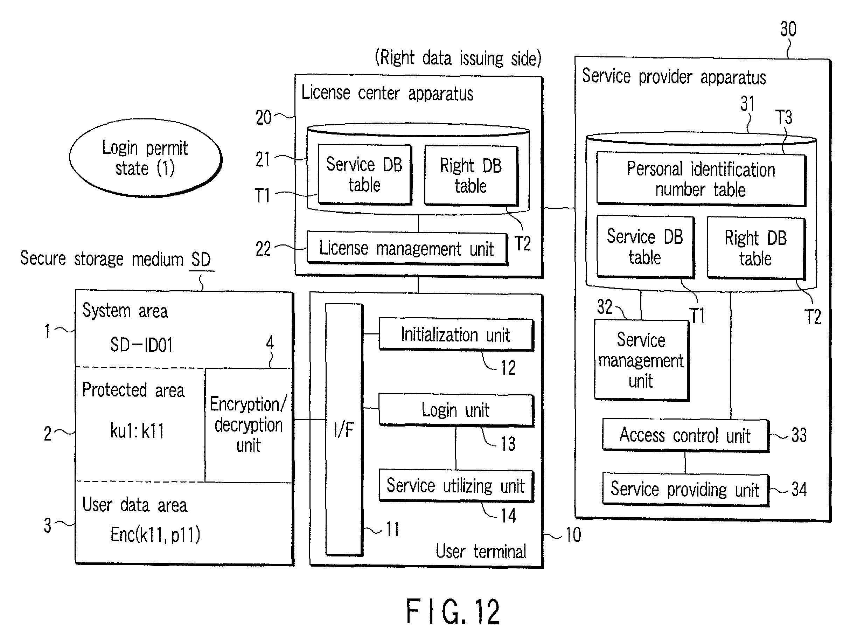

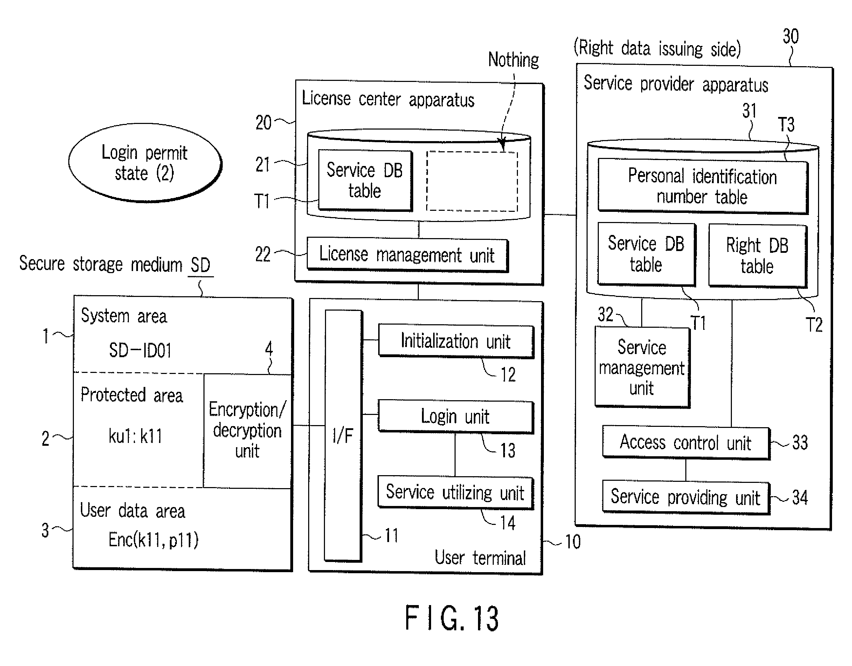

In accordance with any form of FIG. 10 or FIG. 11 described above, the right data delivery processing is completed. The state of the license center apparatus 20 after the delivery of right data is separated as shown in FIG. 12 or FIG. 13 in accordance with whether a side issuing the right data or not. Namely, when the license center apparatus 20 has issued the service right data, the service right data p11 is written into the right DB table T2 in the storage device 21 so as to be associated with the service cipher key k11 of the secure storage medium SD, as shown in FIG. 12. On the other hand, when the license center apparatus 20 has not issued the service right data, the service right data p11 is not written into the right DB table T2, as shown in FIG. 13.

Note that the secure storage medium SD and the service provider apparatus 30 are in the same state in the both of FIGS. 12 and 13. Namely, the secure storage medium SD is in the state in which initialization processing has been completed, and moreover, the encrypted service right data Enc(k11, p11) are stored in the user data area 3 by the right data delivery processing. In the service provider apparatus 30, the service cipher key k11 and the service right data p11 of the secure storage medium SD are written into the right DB table T2 in the storage device 31.

Next, login processing will be described.

(Login Processing)

As shown in FIG. 14, the user terminal 10 reads the medium identifier SD-ID01 from the secure storage medium SD at the time of login (ST31), and transmits the medium identifier SD-ID01 and a login request to the service provider apparatus 30 (ST32).

When the medium identifier SD-ID01 and the login request are received, the service provider apparatus 30 reads the service identifier ID1 and the service right data p11 which correspond to the medium identifier SD-ID01 with reference to the respective tables T1 and T2 of the storage device 31. Because the service right data p11 is used for a collation to be described later, the service right data p11 may be read at the time of collation.

Thereafter, the service provider apparatus 30 sends back the service identifier ID1 to the user terminal 10 (ST33). Note that the service identifier ID1 corresponding to the medium identifier SD-ID01 is not limited to one. Specifically, there is a possibility that a plurality of services are provided from a same service provider. For example, there are cases in which, when a plurality of searching services such as an English document searching service, a national congress searching service, a Patent KOKAI Publication searching service, and the like are presented by the same service provider apparatus 30, accounting systems of the respective searching services are different from one another. In such a case, the user terminal 10 transmits the medium identifier SD-ID01 to the service provider apparatus 30 by clicking on a desired service icon by an operation of a user. It is sufficient that the service provider apparatus 30 sends back a service identifier corresponding to the clicked icon to the user terminal 10 in response thereto. In any case, a case in which one service identifier ID1 is sent back will be described as an example from the beginning.

The user terminal 10 inputs the service identifier ID1 to the secure storage medium SD (ST34). However, the service identifier ID1 is not input to the secure storage medium SD, but may be stored in a memory of the user terminal 10. In this case, it is necessary to have a table in which the service identifier ID1 and the service cipher key k11 are associated with one another, in the secure storage medium SD. However, this table is not necessarily written at each login. Namely, if the table is in the secure storage medium SD, there is no need to update the table at login thereafter. However, here, suppose that the service identifier ID1 is input to the secure storage medium SD, as described in step 34. In this way, the effect that the service identifier ID1 may be input to the secure storage medium SD, or may be stored in the memory of the user terminal 10 is the same as in the following respective embodiments.

Next, the user terminal 10 shares the session key Ks with the secure storage medium SD (ST35).

The secure storage medium SD encrypts the service cipher key k11 corresponding to the service identifier ID1 by the session key Ks (ST36), and obtains an encrypted service cipher key Enc(ks, k11). Thereafter, the secure storage medium SD transmits the encrypted service cipher key Enc(ks, k11) and the encrypted service right data Enc(k11, p11) in the user data area 3 to the user terminal 10 (ST37).

The user terminal 10 reads the encrypted service cipher key and encrypted service right data from the secure storage medium SD, and then, decrypts the encrypted service cipher key Enc(ks, k11) by the session key Ks (ST38).

Next, the user terminal 10 decrypts the encrypted service right data Enc(k11, p11) on the basis of the decrypted service cipher key k11 (ST39), and transmits the obtained service right data p11 to the service provider apparatus 30 (ST40).

The service provider apparatus 30 collates the service right data p11 and the corresponding latest service right data p11 in the storage device 31. When the both are the same, the service provider apparatus 30 determines whether or not the service right data p11 is valid on the basis of the update schedule information in the service right data p11 (ST41). The service provider apparatus 30 gives notice of access denied to the user terminal 10 when the result of determination shows the invalidity, and gives notice of access permit to the user terminal 10 when the result of determination shows the validity (ST42).

When the notice of access denied or access permit is received, the user terminal 10 terminates the login.

Hereinafter, when an access permit is received, the user terminal 10 receives an offer of service from the service provider apparatus 30 by an operation of an operator. Further, when an access denied is received, the user terminal 10 may retry the login processing, or may execute inquiry processing with respect to the service provider apparatus 30 or the license center apparatus 20 by an operation of an operator.

As described above, in accordance with the present embodiment, the configuration is made in which login is carried out by using the service right data p11 for each medium identifier SD-ID01 of the secure storage medium SD. Therefore, unless a dishonest person uses the secure storage medium SD, it is impossible to log in even if the dishonest person copies authentication information. Further, provided that a secure storage medium SD is distributed to every single person belonging to a corporation, it can be applied to corporate users in the same way as individual users. Namely, it is possible to provide a login system and method which can be easily applied to corporate members, and which can prevent unauthorized use even if authentication information is copied.

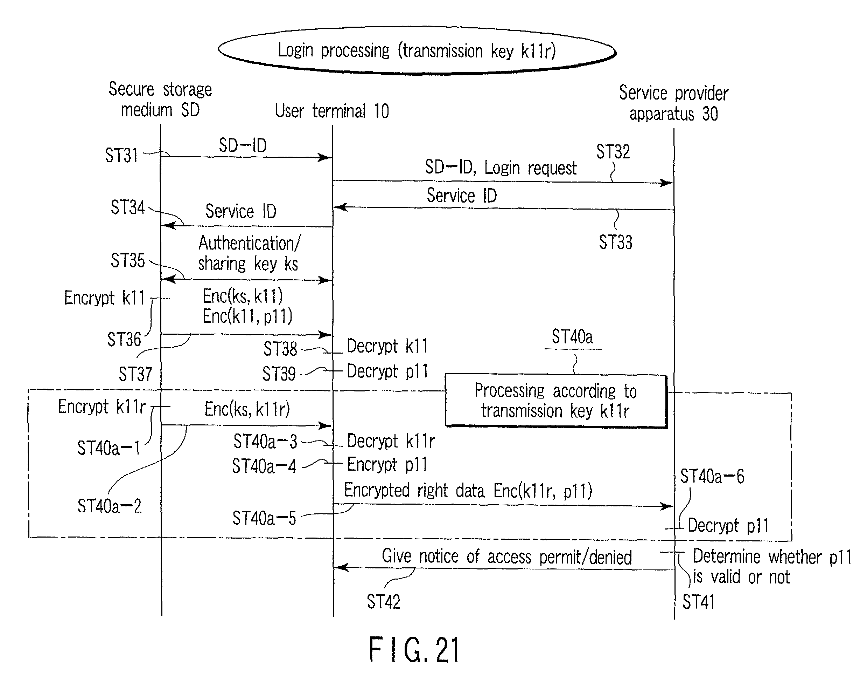

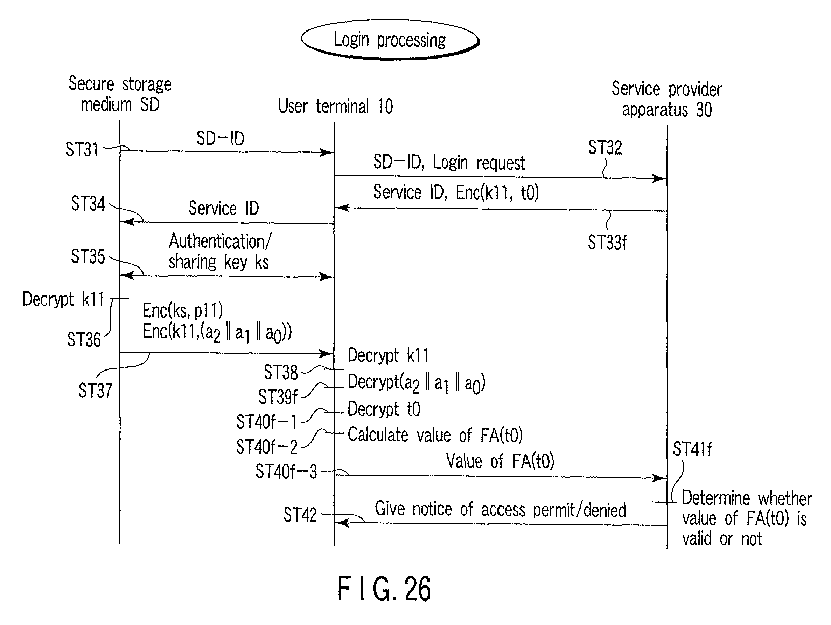

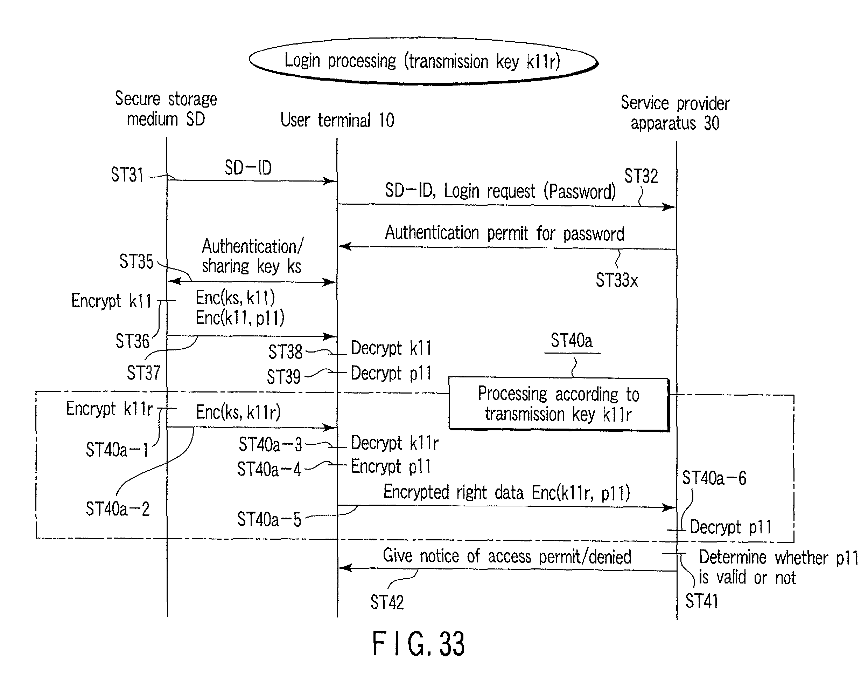

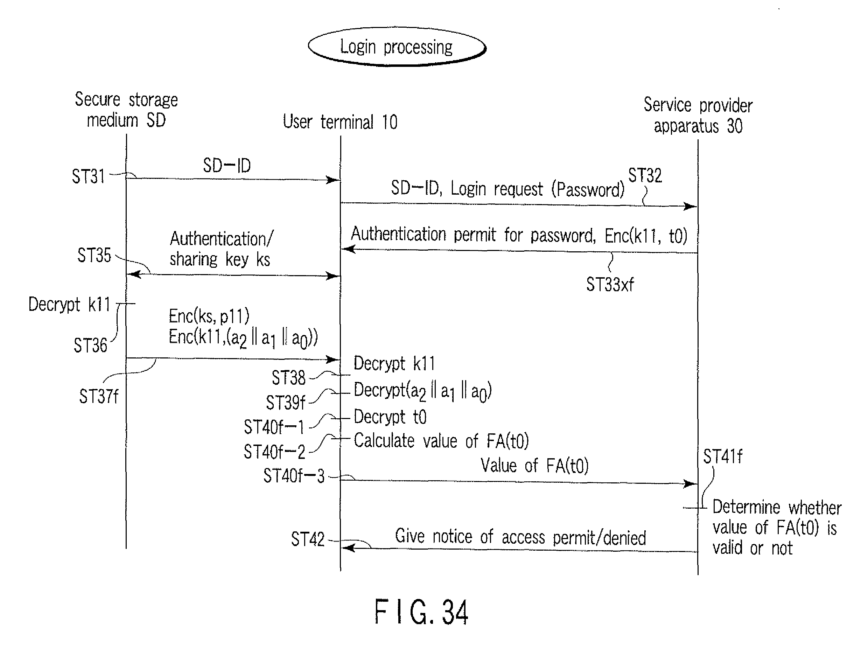

Note that, even if the above-described embodiment is modified to be a configuration in which, in the login processing, steps ST32 to ST34 are omitted, and the service right data p11 and the medium identifier SD-ID are transmitted to the service provider apparatus 30 in step ST40, the effect of the present embodiment can be obtained. In this modified example, the timing in which the latest service right data p11 corresponding to the medium identifier SD-ID is after step ST40. Further, this modified example may be executed in the same way as in the following embodiments. However, in the following embodiments, step ST40 is read as step ST40a-5 (FIG. 21, FIG. 33) or ST40f-3 (FIG. 26, FIG. 34).

(Second Embodiment)

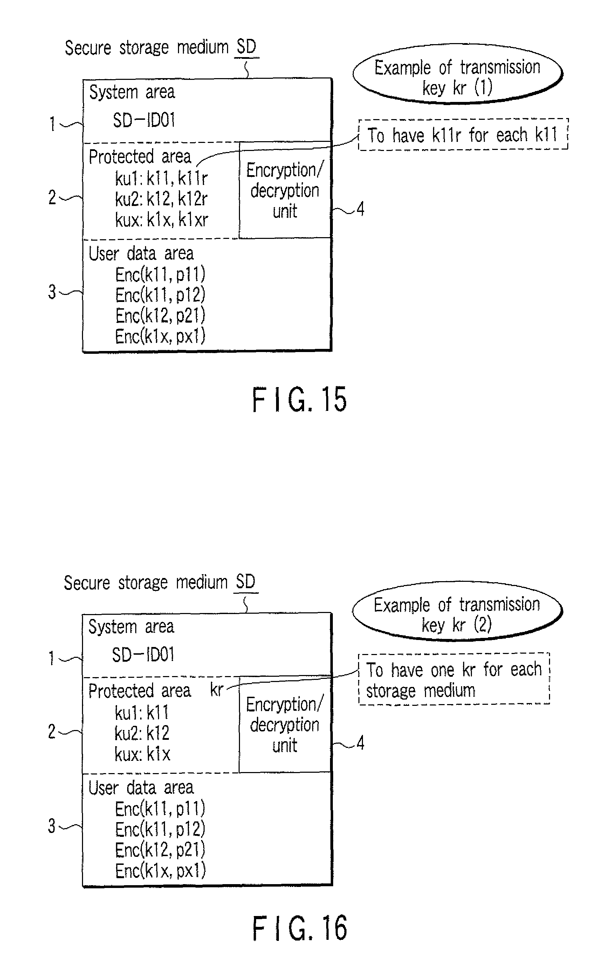

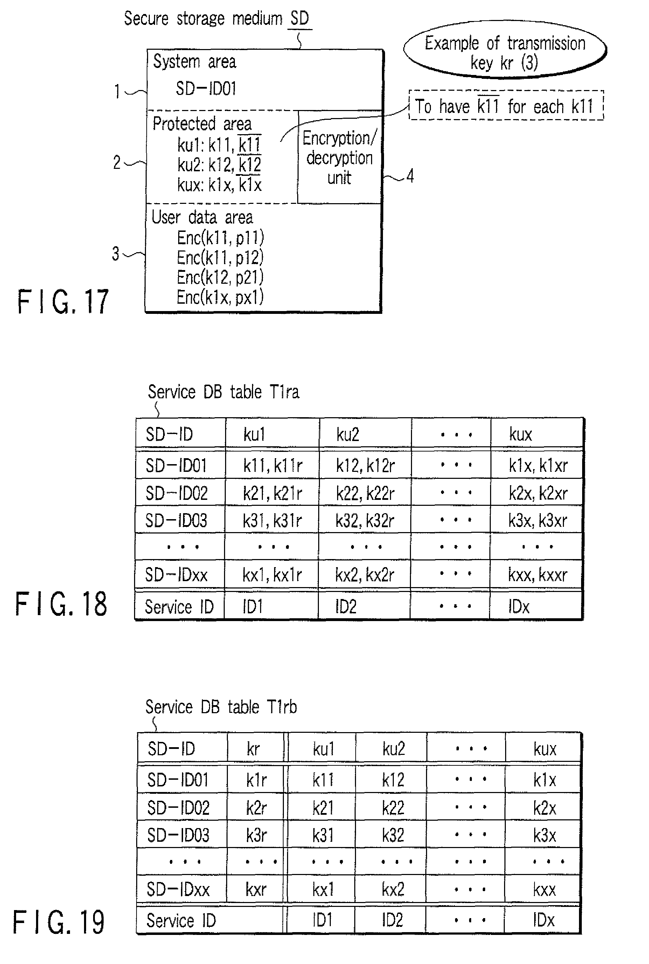

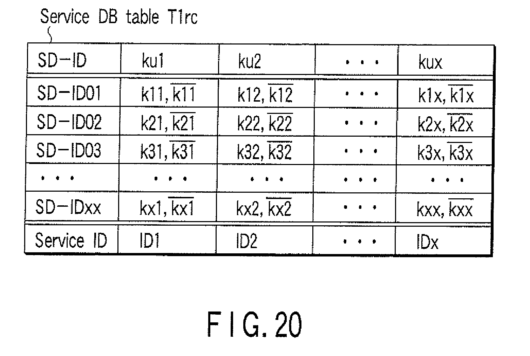

FIGS. 15 to 17 are schematic diagrams each showing a configuration of a secure storage medium applied to a login system according to a second embodiment of the present invention or modified examples thereof, and FIGS. 18 to 20 are schematic diagrams each showing a configuration of a service DB table applied to the system or modified examples thereof. In the FIGS. 15 to 20, portions which are the same as those in the drawings described above are denoted by the same reference numerals, and detailed descriptions thereof are omitted, and here, portions which are different from those will be mainly described. Duplicate descriptions will be omitted in the same way as in the following embodiments.

Namely, the present embodiment is a modified example of the first embodiment, and is configured such that, with respect to step ST40 in which the right data p11 is transmitted at the time of login processing, a transmission key kr for encrypting the right data p11 to be transmitted is shared with the secure storage medium SD and the service provider apparatus 30.

In the secure storage medium SD, as shown in one of FIGS. 15 to 17, transmission keys k11r and kr or k11 bar, etc. are provided to the protected area (key area) 2 as described in the following (1) to (3). Note that the "k11 bar" corresponds to one that a cross line is inscribed above the k11 in FIG. 17.

(1) A transmission key k11r is provided to each service cipher key k11.
(2) One transmission key kr is provided to each secure storage medium SD.
(3) A transmission key k11 bar formed due to the k11 being bit-inversed is provided to each service cipher key k11.

On the other hand, service DB tables T1ra, T1rb, T1rc have transmission keys k11r and kr or k11 bar, etc. in the same way as in the above-described (1) to (3) as shown in one of FIGS. 18 to 20.

In accordance therewith, the user terminal 10 has the following functions (f10-1) to (f10-3) in place of the function of transmitting the decrypted service right data p11 to the service provider apparatus 30.

(f10-1) Function of reading the transmission key kr from the secure storage medium SD.
(f10-2) Function of encrypting the decrypted service right data p11 by the transmission keys k11r and kr or the k11 bar, etc.
(f10-3) Function of transmitting the obtained encrypted service right data Enc (for example, kr, p11) to the service provider apparatus 30.

The service provider apparatus 30 has the following functions (f30-1) to (f30-2) in place of the function of collating described above.

(f30-1) Function of decrypting the encrypted service right data received from the user terminal 10 by the shared transmission keys kllr and kr or k11 bar, etc.
(f30-2) Collation function of collating the obtained service right data p11 with the corresponding latest service right data p11 in the storage device 31.

Next, operations of the login system configured as described above will be described by using the sequence diagram of FIG. 21. Note that the following descriptions will be described by using the transmission key kllr in FIGS. 15 and 18 as a representative example.

Now, steps from ST31 up to ST 39 are executed as described above. Namely, the user terminal 10 receives an service ID from the service provider apparatus 30 on the basis of a login request. Further, the user terminal 10 shares the session key Ks with the secure storage medium SD, and decrypts the service cipher key k11 and the service right data p11 to be obtained.

Next, the secure storage medium SD encrypts the transmission key k11r corresponding to the service cipher key 11 by the session key Ks (ST40a-1), and transmits the obtained encrypted transmission key Enc(kr, k11r) to the user terminal 10 (ST40a-2).

The user terminal 10 decrypts the read encrypted transmission key Enc(ks, k11r) by the session key Ks (ST40a-3), and encrypts the service right data p11 by the obtained transmission key kllr (ST40a-4).

Thereafter, the user terminal 10 transmits this encrypted service right data Enc(k11r, p11) obtained by encrypting to the service provider apparatus 30 (ST40a-5).

The service provider apparatus 30 decrypts the received encrypted service right data by the shared transmission key k11r (ST40a-6), and collates the obtained service right data p11 with the corresponding latest service right data p11 in the storage device 31.

Hereinafter, in the same way as described above, the service provider apparatus 30 executes steps ST41 to ST42.

In accordance with the embodiment as described above, in addition to the effect of the first embodiment, the service right data p11 can be encrypted and transmitted, so that the strength of security in the service right data can be improved.

(Third Embodiment)

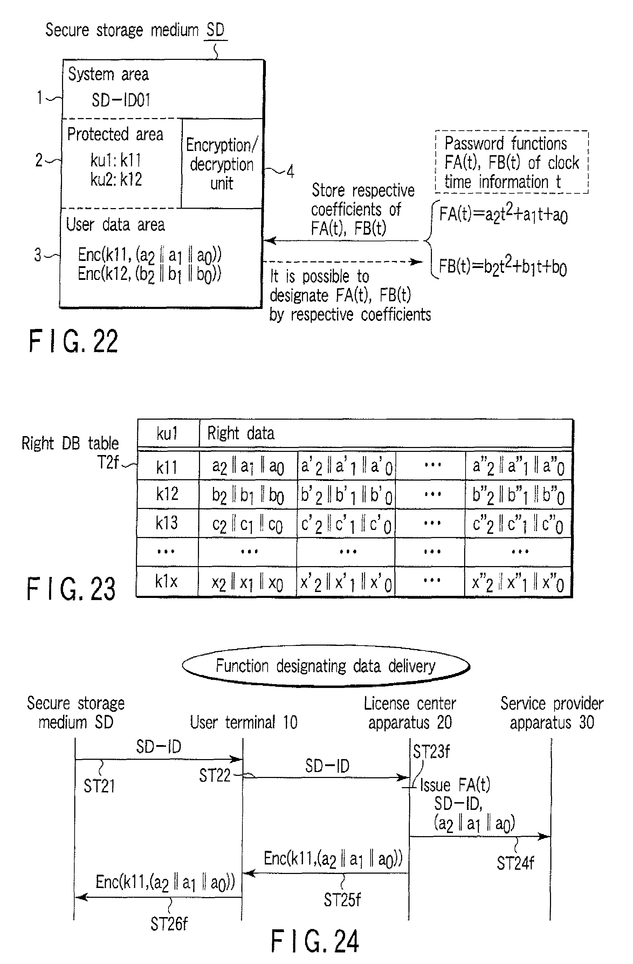

FIG. 22 is a schematic diagram showing a configuration of a secure storage medium applied to a login system according to a third embodiment of the present invention, and FIG. 23 is a schematic diagram showing a configuration of a right DB table applied to the system.

Namely, the present embodiment is a modified example of the first embodiment, and is configured such that, in place of the service right data p11 described above, function designating data (for example, $a_2$, $a_1$, $a_0$) for designating a function (for example, FA(t)) of login clock time information (time login information) t are used. Note that FA(t) is a function for calculating a password (password function) for the service ID1. FB(t) is a password function for the service ID2. Hereinafter, in the same way, arbitrary password functions which are the same or different from one another can be used for each service identifier. Note that the following description will be described by using a password function FA(t) as a representative example.

Here, the password function FA(t) is a function whose format has been determined in advance for each service identifier. Here, as a matter of convenience in the description, suppose that the password function FA(t) is a low-degree quadratic polynomial as shown hereinafter.

$$FA(t) = a_2t^2 + a_1t + a_0$$

Note that variable t is login clock time information (date and clock time data). However, the variable t is not necessarily limited to clock time information, and for example, may be a random number. Such a password function FA(t) is uniquely determined for each of the respective secure storage media SD and for each service identifier by designating coefficients $a_2$ and $a_1$, and a constant $a_0$. Namely, even if separate secure storage media SD and SD' execute login processing into the service of the same service identifier ID1 at the same clock time t, separate password functions FA(t) and FA'(t) are designated.

The right DB table T2f is such that, in the right DB table T2 described above, function designating data $\{a_2\|a_1\|a_0\}$, $\{b_2\|b_1\|b_0\}$, $\cdots$ are stored as the service right data p11, p12, .... Note that the notation of "∥" denotes a concatenation. The dashes "'" and "''" express "after update".

In accordance therewith, the user terminal 10 and the respective apparatuses 20 and 30 have a function of using the function designating data $\{a_2\|a_1\|a_0\}$, $\{b_2\|b_1\|b_0\}$, ... in place of the service right data p11, p12, ....

Specifically, a login unit 13 of the user terminal 10 has the following functions (f13-10) to (f13-15).

(f13-10) Function of, when an encrypted login clock time Enc(k11, t0) sent back from the service provider apparatus 30 by transmitting a login request and the read service identifier ID1 are received, inputting the service identifier ID1 into the secure storage medium SD, and of sharing the session key Ks with the secure storage medium SD.
(f13-11) Function of reading the service cipher key Enc(ks, k11) encrypted by the session key Ks, and the encrypted function designating data Enc(k11, $(a_2\|a_1\|a_0)$) from the secure storage medium SD.
(f13-12) Function of decrypting the encrypted service cipher key Enc(ks, k11) by the session key Ks.

(f13-13) Function of decrypting the encrypted function designating data $Enc(k11, (a_2\|a_1\|a_0))$ on the basis of the decrypted service cipher key $k11$, and of decrypting the encrypted login clock time $Enc(k11, t0)$.

(f13-14) Function of calculating a function value $FA(t0)$ (first function value) by substituting the login clock time information $t0$ for the password function $FA(t)$ obtained from the function designating data $a_2\|a_1\|a_0$.

(f13-15) Function of transmitting the function value $FA(t0)$ to the service provider apparatus 30.

The access control unit 33 of the service provider apparatus 30 has the following functions (f33-10) to (f33-14).

(f33-10) Function of, when a medium identifier SD-ID01 and a login request are received from the user terminal 10, reading the service identifier ID1 corresponding to the medium identifier SD-ID01 and the function designating data $\{a_2\|a_1\|a_0\}$ with reference to the respective tables T1 and T2 of the storage device 31.

(f33-11) Function of calculating a function value $FA(t0)$ (second function value) by substituting the login clock time information $t0$ associated with a clock time when the login request is received, for the password function $FA(t)$ obtained from the function designating data $\{a_2\|a_1\|a_0\}$.

(f33-12) Function of encrypting the login clock time information $t0$ by the service cipher key $k11$, and of sending back the obtained encrypted login clock time $Enc(k11, t0)$ and the read service identifier ID1 to the user terminal 10.

(f33-13) Function of collating the function value $FA(t0)$ received from the user terminal 10 and the function value $FA(t0)$ calculated at the time of receiving the login request.

(f33-14) Function of, when the both are the same as a result of the collation, determining that the received function value $FA(t0)$ is valid, and of giving notice of access permit to the user terminal 10.

Next, operations of the login system configured as described above will be described by using the sequences of FIGS. 24 and 26.

(Function Designating Data Delivery)

In the same way as described above, in the user terminal 10, the medium identifier SD-ID01 read from the secure storage medium SD is transmitted to the license center apparatus 20 by an operation of an operator as shown in FIG. 24 (ST21 to ST22).

In the license center apparatus 20, the license management unit 22 issues the function designating data $a_2$, $a_1$, $a_0$ for designating a function $FA(t)$ so as to correspond to a service identifier for each medium identifier SD-ID01 received (ST23f), and the data are written into the storage device 21. Next, the license management unit 22 encrypts the function designating data $a_2$, $a_1$, $a_0$ by the medium identifier SD-ID01 and the service cipher key $k11$ corresponding to a service identifier.

Thereafter, the license center apparatus 20 delivers the function designating data $(a_2\|a_1\|a_0)$ before encrypting and the medium identifier SD-ID01 to the service provider apparatus 30 (ST24f).

Subsequently, the license center apparatus 20 delivers the encrypted function designating data $Enc(k11, (a_2\|a_1\|a_0))$ to the user terminal 10 (ST25f). The user terminal 10 writes the encrypted function designating data $Enc(k11, (a_2\|a_1\|a_0))$ into the user data area 3 of the secure storage medium SD (ST26f).

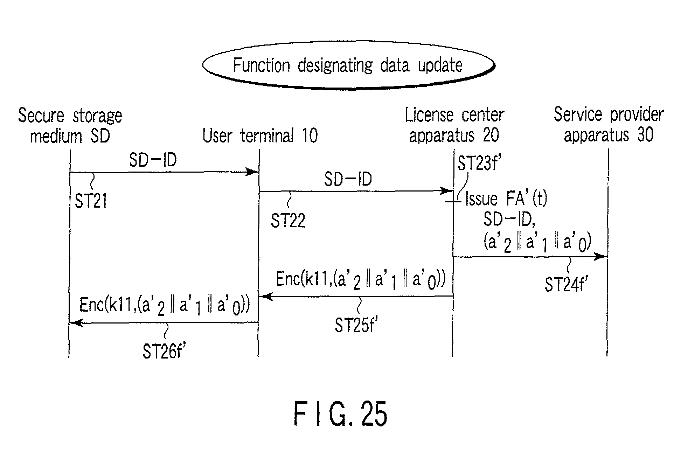

In accordance with the above description, the function designating data delivery processing is completed. Note that update processing for function designating data may use, in place of the function designating data $(a_2\|a_1\|a_0)$ before update in FIG. 24 described above, function designating data $(a2'\|a_1'\|a_0')$ after update as shown in FIG. 25.

Now, login processing will be described.

(Login Processing)

As shown in FIG. 26, in the same way as described above, the user terminal 10 transmits the medium identifier SD-ID01 read from the secure storage medium SD and a login request to the service provider apparatus 30 (ST31 to ST32).

When the medium identifier SD-ID01 and the login request are received, the service provider apparatus 30 reads the service identifier ID1 corresponding to the medium identifier SD-ID01, the service cipher key $k11$, and the function designating data $\{a_2\|a_1\|a_0\}$ with reference to the respective tables T1 and T2 of the storage device 31.

The service provider apparatus 30 calculates a function value $FA(t0)$ by substituting the login clock time information $t0$ associated with a clock time when the login request is received, for the password function $FA(t)$ obtained from the function designating data $\{a_2\|a_1\|a_0\}$.

Thereafter, the service provider apparatus 30 encrypts the login clock time information $t0$ by the service cipher key $k11$, and sends back the obtained encrypted login clock time $Enc(k11, t0)$ and the read service identifier ID1 to the user terminal 10 (ST33f).

The user terminal 10 inputs the service identifier ID1 into the secure storage medium SD (ST34), and shares the session key Ks with the secure storage medium SD (ST35).

As described above, the secure storage medium SD encrypts the service cipher key $k11$ (ST36), and obtains the encrypted service cipher key $Enc(ks, k11)$. Thereafter, the secure storage medium SD transmits this encrypted service cipher key $Enc(ks, k11)$ and the encrypted function designating data Enc (k11, ($a_2 \| a_1 \| a_0$)) in the user data area 3, to the user terminal 10 (ST37f).

The user terminal 10 reads the encrypted service cipher key and encrypted function designating data from the secure storage medium SD, and thereafter, decrypts the encrypted service cipher key Enc(ks, k11) by the session key Ks (ST38).

Next, the user terminal 10 decrypts the encrypted function designating data Enc(k11, ($a_2 \| a_1 \| a_0$)) on the basis of the decrypted service cipher key k11 (ST39), and decrypts the encrypted login clock time Enc(k11, t0) (ST40f-1). Thereafter, the user terminal 10 calculates a function value FA (t0) by substituting the login clock time information t0 for the password function FA(t) obtained from the function designating data $a_2 \| a_1 \| a_0$ (ST40f-2).

Then, the user terminal 10 transmits the function value FA(t0) to the service provider apparatus 30 (ST40f-3).

The service provider apparatus 30 collates the received function value FA (t0) and the function value FA (t0) calculated before step ST33f. When the both are the same, the service provider apparatus 30 determines that the received function value FA(t0) is valid (ST41f), and gives notice of access permit to the user terminal 10 (ST42).

Hereinafter, in the same way as described above, the user terminal 10 terminates the login when the notice of access permit or access denied is received.

As described above, in accordance with the present embodiment, login is carried out by using the function designating data {$a_2 \| a_1 \| a_0$} with respect to each medium identifier SD-ID01 of the secure storage medium SD. Therefore, differently from the prior art, there is no case of unauthorized use even if a user ID and a password are copied. Further, provided that the secure storage medium SD is distributed to every single person belonging to a corporate, it can be applied to corporate users in the same way as individual users. Namely, it is possible to provide a login system which can be easily applied to corporate members, and which can prevent unauthorized use even if authentication information is copied.

As described above, in accordance with the present embodiment, even if the function designating data are used in place of the service right data in the first embodiment, the operational effect which is the same as that of the first embodiment can be obtained. More specifically, the configuration is made in which login is carried out by using the first and second function values calculated on the basis of the login clock time information and the function designating data with respect to each medium identifier of the secure storage medium. Accordingly, unless a dishonest person uses the secure storage medium SD, it is impossible to log in even if the dishonest person copies authentication information. Further, in the same way, provided that a secure storage medium is distributed to every single person belonging to a corporate, it can be applied to corporate users in the same way as individual users. Namely, it is possible to provide a login system which can be easily applied to corporate members, and which can prevent unauthorized use even if authentication information is copied.

Further, in a case of the present embodiment, an improvement in the strength of security can be expected because a time function F(t) is used.

(Fourth Embodiment)

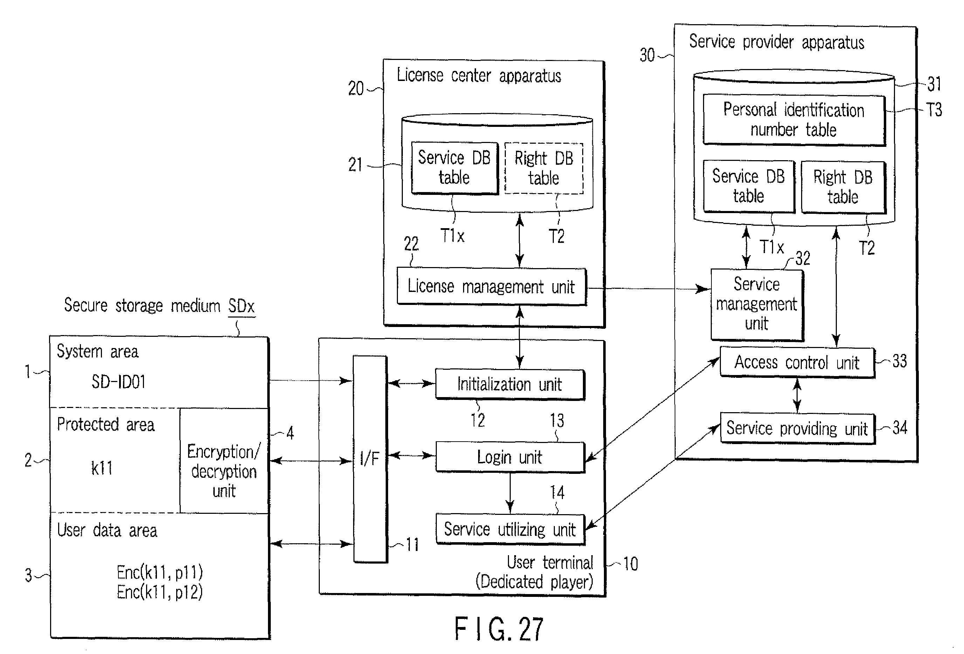

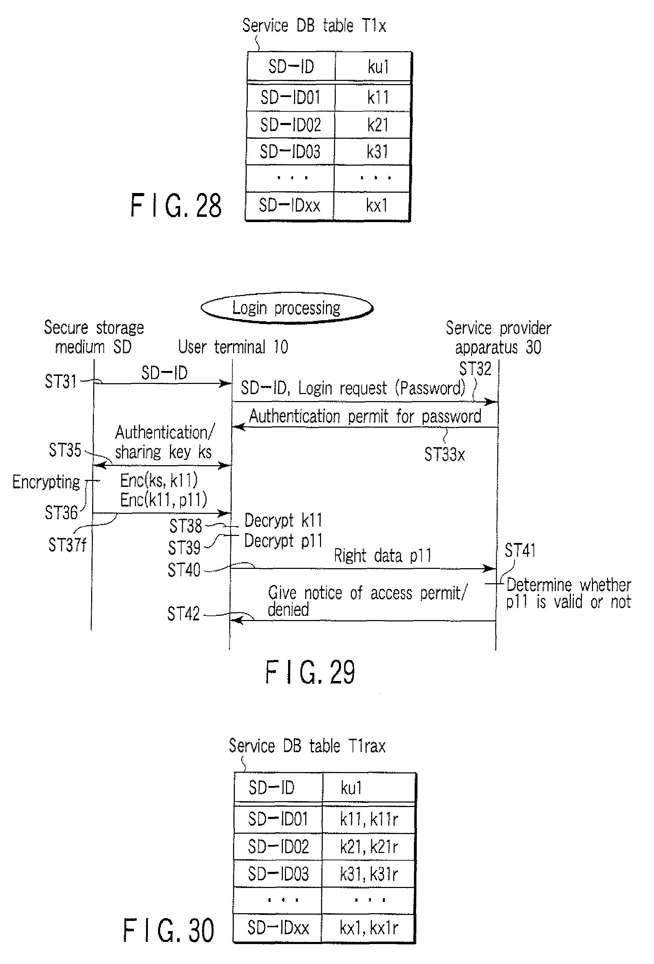

FIG. 27 is a schematic diagram showing a configuration of a login system according to a fourth embodiment of the present invention, and FIG. 28 is a schematic diagram showing a configuration of a service DB table applied to the system.

Namely, the present invention is a modified example of the first embodiment, and is configured such that, from the standpoint that the service identifier ID is omitted, a secure storage medium SDx dedicated for a specific service, the user terminal 10 serving as a dedicated player, and a service DB table T1x are used.

Here, the secure storage medium SDx is configured such that, in the function described above, a function in which the service cipher key k11 dedicated for a specific service is provided in the protected area 2, and service cipher keys for other services are not provided.

The user terminal 10 is configured such that, in the functions described above, a function for processing the service identifier ID is omitted in association with an omission of the service identifier ID.

In the service DB table T1x, as shown in FIG. 28, the service cipher keys k11, k21, ... dedicated for specific services are stored so as to be associated with each of the medium identifiers SD-ID1, 2, ..., and is a DB table dedicated for specific service.

Next, operations of the login system configured as described above will be described by using the sequence diagram of FIG. 29. Note that the initialization processing and the right data delivery processing are the same as described above, and therefore, the login processing will be described.

As shown in FIG. 29, the user terminal 10 reads the medium identifier SD-ID01 from the secure storage medium SD by an operation of an operator at the time of login (ST31), and transmits the medium identifier SD-ID01 and a login request including a password (personal identification number) to the service provider apparatus 30 (ST32).

When the medium identifier SD-ID01 and the login request are received, the service provider apparatus 30 collates a personal identification number corresponding to the medium identifier SD-ID01 and a personal identification number in the login request with reference to the personal identification number table T3 of the storage device 31. Only when the both are the same, the service provider apparatus 30 gives notice of password authentication permit to the user terminal 10 (ST33x).

When a password authentication permit is received, hereinafter, the user terminal 10 executes the processings on and after step ST35 described above.

As described above, in accordance with the present embodiment, even if a configuration is used in which the secure storage medium SDx dedicated for specific service and the service DB table T1x are provided, and the service identifier ID is omitted, the operational effect which is the same as that of the first embodiment can be obtained.

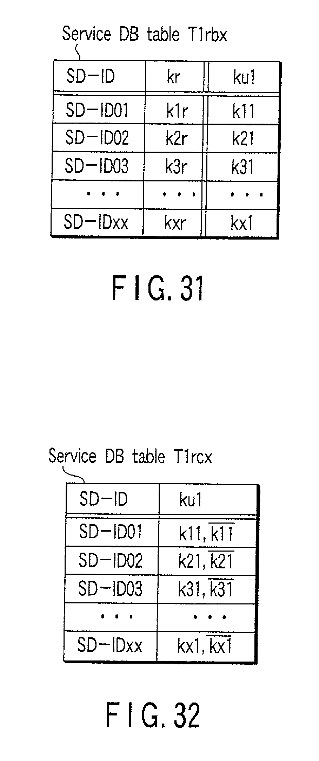

Note that the embodiment is not limited to the first embodiment, and can be executed in the same way as a modified example of the second or third embodiment. For example, in a case of a modified example of the second embodiment, as shown in one of FIGS. 30 to 32, a service DB table T1rax, T1rbx, or Tlrcx dedicated for specific service may be provided, and as shown in FIG. 33, step ST33x in which a password authentication permit is sent back may be used in place of the processings in steps ST33 and ST34 described above. In the same way as a case of a modified example of the third embodiment, as shown in FIG. 34, step ST33xf in which a password authentication permit is sent back may be used in place of the processings in steps ST33 and ST34 described above. Provided that such a modified example is used, the operational effect which is the same as that of the applied second or third embodiment can be obtained.

The technology described in relation to the above embodiments can be embodied as a program executable by a computer. The program can be distributed to people after being stored in recording mediums, including a magnetic disk (e.g., a floppy (registered trade mark) disk or a hard disk), an optical disk (e.g., a CD-ROM or a DVD), a magneto-optical disk (MO) or a semiconductor memory.

The recording mediums can use any recording format as long as they can store a program and are readable by a computer.

An OS (Operating System) which a computer executes on the basis of a program installed on a computer from a recording medium, MW (middleware) such as database management software, network software, etc. may be part of the processing that realizes the present embodiment.

Moreover, a recording medium used in the present invention is not limited to a medium that is independent of a computer; it may be any kind of recording medium as long as it can store or temporarily store a program downloaded from a LAN or the Internet.

Two or more recording mediums may be used. In other words, the present invention covers the case where the processing of the embodiment is executed by use of two or more recording mediums. It should be also noted that the recording mediums may be of any structure as long as they fulfill the functions required.

The computer used in the present invention executes the processing on the basis of the program stored in a storage medium. As long as this function is satisfied, the computer may be of any structure. It may be a single personal computer, a system wherein a plurality of apparatuses are connected as a network, etc.

The computer used in the present invention is not limited to a personal computer; it may be an operation executing apparatus, a microcomputer or the like that is included in an information processing apparatus. The concept "computer" used in the present invention is intended to mean any kind of apparatus or device that can achieve the functions of the present invention on the basis of a program.

The present invention is not limited to the above-described embodiments. Accordingly, in practicing the invention, various modifications of constituent elements can be made without departing from its spirit or scope. In addition, various inventions can be formed by appropriately combining a plurality of constituent elements disclosed in the embodiments. For example, some constituent elements may be omitted from those described in the embodiments. Alternatively, constituent elements of different embodiments may appropriately be combined.

Industrial Applicability

As described above, the login system and the method thereof of the present invention can be easily applied to corporate members, and are suitable for preventing unauthorized use even if authentication information is copied.

**Claims**

1. A login system to log in to a service provider apparatus from a user terminal which detachably holds a secure storage medium having a medium identifier stored therein, **characterized in that**
   the secure storage medium (SD) comprises:

   > a key area (2) in which service cipher keys (k11, k12, k1x) issued on the basis the medium identifier (SD-ID01) are stored; and
   > a data area (3) in which encrypted service right data (Enc(k11, p11), Enc(k11, p12), Enc(k12, p21), Enc(k1x, px1)) obtained by encrypting service right data (p11, p12, p12, px1) by means of the service cipher keys are stored,
   > the user terminal (10) comprises:

   >> a device (11, 14) configured to read a medium identifier from the secure storage medium at the time of the login;
   >> a device (11, 14) configured to read the service cipher keys and the encrypted service right data from the secure storage medium;

a device (14) configured to decrypt the encrypted service right data on the basis of the service cipher keys;

a device (14) configured to transmit the decrypted service right data and the read medium identifier to the service provider apparatus (30); and

a device (14) configured to terminate the login when an access is permitted from the service provider apparatus (30) by the transmission, and

the service provider apparatus comprises:

a storage device (31) having service right data stored therein for each medium identifier;

a device (33) configured to read corresponding service right data from the storage device on the basis of the medium identifier received from the user terminal;

a collating device (33) which collates service right data received from the user terminal with service right data read from the storage device; and

a device (33) configured to, when the both are the same as a result of the collation, permit an access of the user terminal on the basis of the service right data.

2. The login system according to claim 1, **characterized by** further comprising a license center apparatus (30) which is different from the user terminal (10) and the service provider apparatus (30), wherein

the license center apparatus comprises:

a device (22) configured to, at the time of initializing the secure storage medium, generate a service cipher key so as to correspond to a service identifier for each medium identifier of the secure storage medium;

a device (22) configured to deliver the service cipher key and the medium identifier to the service provider apparatus; and

a device (22) configured to deliver the service cipher key to the secure storage medium via the user terminal.

3. The login system according to claim 2, **characterized in that**

the license center apparatus comprises:

a device (22) configured to, at the time of delivering the service right data, issue service right data corresponding to a service identifier for each medium identifier of the secure storage medium;

a device (22) configured to deliver the service right data and the medium identifier to the service provider apparatus;

a device (22) configured to encrypt the service right data by the service cipher key generated at the time of the initialization; and

a device (22) configured to deliver the encrypted service right data obtained by the encrypting to the secure storage medium via the user terminal.

4. The login system according to claim 3, **characterized in that**

the license center apparatus (20) which is an origin of issuing the service right data comprises:

a device (22) configured to update the issued service right data periodically.

5. The login system according to claim 2, **characterized in that**

the service provider apparatus comprises:

a device (32) configured to, at the time of delivering the service right data, issue service right data corresponding to a service identifier for each medium identifier of the secure storage medium;

a device (32) configured to encrypt the service right data by the service cipher key corresponding to the medium identifier in the storage device (31); and

a device (32) configured to deliver the encrypted service right data obtained by the encrypting to the secure storage medium via the user terminal.

6. The login system according to claim 5, **characterized in that**

the service provider apparatus (30) which is an origin of issuing the service right data comprises:

a device (32) configured to update the issued service right data periodically.

7. A login system to log in to a service provider apparatus from a user terminal which detachably holds a secure storage medium having a medium identifier stored therein, **characterized in that**

the secure storage medium (SD) comprises:

a key area (2) in which service cipher keys (k11, k12, k1x) issued on the basis the medium identifier (SD-ID01) are stored; and

a data area (3) in which encrypted service right data (Enc(k11, p11), Enc(k11, p12), Enc(k12, p21), Enc(k1x, px1)) obtained by encrypting service right data (p11, p12, p12, px1) by means of the service cipher keys are stored,
the user terminal (10) comprises:

a device (11, 14) configured to read a medium identifier from the secure storage medium at the time of the login;
a device configured to transmit the read medium identifier and a login request to the service provider apparatus (30);
a device (11, 14) configured to read the service cipher key and the encrypted service right data from the secure storage medium on the basis of the transmission;
a device (14) configured to decrypt the encrypted service right data on the basis of the service cipher key;
a device (14) configured to transmit the decrypted service right data to the service provider apparatus; and
a device (14) configured to terminate the login when an access is permitted from the service provider apparatus by the transmission, and
the service provider apparatus comprises:

a storage device (31) having service right data stored therein for each medium identifier;
a device (33) configured to read corresponding service right data in the storage device on the basis of a medium identifier and a login request received from the user terminal;
a collating device (33) configured to, when service right data is received from the user terminal, collate the service right data with the read service right data; and
a device (33) configured to, when the both are the same as a result of the collation, permit an access of the user terminal on the basis of the service right data.

8. The login system according to claim 7, **characterized by** further comprising a license center apparatus (30) which is different from the user terminal (10) and the service provider apparatus (30), wherein
the license center apparatus comprises:

a device (22) configured to, at the time of initializing the secure storage medium, generate a service cipher key so as to correspond to a service identifier for each medium identifier of the secure storage medium;
a device (22) configured to deliver the service cipher key and the medium identifier to the service provider apparatus; and
a device (22) configured to deliver the service cipher key to the secure storage medium via the user terminal.

9. The login system according to claim 8, **characterized in that**
the license center apparatus comprises:

a device (22) configured to, at the time of delivering the service right data, issue service right data corresponding to a service identifier for each medium identifier of the secure storage medium;
a device (22) configured to deliver the service right data and the medium identifier to the service provider apparatus;
a device (22) configured to encrypt the service right data by the service cipher key generated at the time of the initialization; and
a device (22) configured to deliver the encrypted service right data obtained by the encrypting to the secure storage medium via the user terminal.

10. The login system according to claim 9, **characterized in that**
the license center apparatus (20) which is an origin of issuing the service right data comprises:

a device (22) configured to update the issued service right data periodically.

11. The login system according to claim 8, **characterized in that**
the service provider apparatus comprises:

a device (32) configured to, at the time of delivering the service right data, issue service right data corresponding to a service identifier for each medium identifier of the secure storage medium;
a device (32) configured to encrypt the service right data by the service cipher key corresponding to the medium identifier in the storage device; and
a device (32) configured to deliver the encrypted service right data obtained by the encrypting to the secure storage medium via the user terminal.

12. The login system according to claim 11, **characterized in that**
the service provider apparatus (30) which is an origin of issuing the service right data comprises:

a device (32) configured to update the issued service right data periodically.

13. A login system to log in to a service provider apparatus from a user terminal which detachably holds a secure storage medium having a medium identifier stored therein, **characterized in that**
the secure storage medium (SD) comprises:

a key area (2) in which service cipher keys (k11, k12, k1x) issued on the basis the medium identifier (SD-ID01) are stored; and
a data area (3) in which encrypted service right data (Enc(k11, p11), Enc(k11, p12), Enc(k12, p21), Enc(k1x, px1)) obtained by encrypting service right data (p11, p12, p12, px1) by means of the service cipher keys are stored,
the user terminal (10) comprises:

a device (11, 14) configured to read a medium identifier from the secure storage medium at the time of the login;
a device (14) configured to transmit the read medium identifier and a login request to the service provider apparatus (30);
a device (11, 14) configured to read the service cipher key and the encrypted service right data from the secure storage medium on the basis of the service identifier received from the service provider apparatus by the transmission;
a device (14) configured to decrypt the encrypted service right data on the basis of the service cipher key;
a device (14) configured to transmit the decrypted service right data to the service provider apparatus; and
a device (14) configured to terminate the login when an access is permitted from the service provider apparatus by the transmission, and
the service provider apparatus comprises:

a storage device (31) having stored therein service right data corresponding to a service identifier for each medium identifier;
a device (33) configured to, when a medium identifier and a login request are received from the user terminal, send back a service identifier corresponding to the medium identifier with reference to the storage device;
a collating device (33) configured to, when service right data is received from the user terminal, collate the service right data with corresponding service right data in the storage device; and
a device (33) configured to, when the both are the same as a result of the collation, permit an access of the user terminal on the basis of the service right data.

14. The login system according to claim 13,
**characterized by** further comprising a license center apparatus (30) which is different from the user terminal (10) and the service provider apparatus (30), wherein
the license center apparatus comprises:

a device (22) configured to, at the time of initializing the secure storage medium, generate a service cipher key so as to correspond to a service identifier for each medium identifier of the secure storage medium;
a device (22) configured to deliver the service cipher key and the medium identifier to the service provider apparatus; and
a device (22) configured to deliver the service cipher key to the secure storage medium via the user terminal.

15. The login system according to claim 14,
**characterized in that**
the license center apparatus comprises:

a device (22) configured to, at the time of delivering the service right data, issue service right data corresponding to a service identifier for each medium identifier of the secure storage medium;
a device (22) configured to deliver the service right data and the medium identifier to the service provider apparatus;
a device (22) configured to encrypt the service right data by the service cipher key generated at the time of the initialization; and
a device (22) configured to deliver the encrypted service right data obtained by the encrypting to the secure storage medium via the user terminal.

16. The login system according to claim 15,
**characterized in that**
the license center apparatus (20) which is an origin of issuing the service right data comprises:

a device (22) configured to update the issued service right data periodically.

17. The login system according to claim 14,
**characterized in that**
the service provider apparatus comprises:

a device (32) configured to, at the time of delivering the service right data, issue service right data corresponding to a service identifier for each medium identifier of the secure storage medium;

a device (32) configured to encrypt the service right data by the service cipher key corresponding to the medium identifier in the storage device; and

a device (32) configured to deliver the encrypted service right data obtained by the encrypting to the secure storage medium via the user terminal.

18. The login system according to claim 17, **characterized in that**
the service provider apparatus (30) which is an origin of issuing the service right data comprises:

a device (32) configured to update the issued service right data periodically.

19. A login system to log in to a service provider apparatus from a user terminal which detachably holds a secure storage medium having a medium identifier stored therein, **characterized in that**
the secure storage medium (SD) comprises:

a key area (2) in which service cipher keys (k11, k12, k1x) issued on the basis of the medium identifier (SD-ID01), and transmission keys (k11r, kr) are stored; and
a data area (3) in which encrypted service right data (Enc(k11, p11), Enc(k11, p12), Enc(k12, p21), Enc(k1x, px1)) obtained by encrypting service right data (p11, p12, p12, px1) by means of the service cipher keys are stored,
the user terminal (10) comprises:

a device (11, 14) configured to read a medium identifier from the secure storage medium at the time of the login;
a device (11, 14) configured to read the service cipher key (k11) and the encrypted service right data (Enc(k11, p11)) from the secure storage medium;
a device (14) configured to decrypt the encrypted service right data (p11) on the basis of the service cipher key;
a device (11, 14) configured to read the transmission key (k11r) from the secure storage medium;
a device (14) configured to encrypt the decrypted service right data by the transmission key;
a device (14) configured to transmit the encrypted service right data (Enc(k11r, p11)) obtained by the encrypting to the service provider apparatus; and
a device (14) configured to terminate the login when an access is permitted from the service provider apparatus (30) by the transmission, and
the service provider apparatus comprises:

a storage device (31) having stored therein service right data (p11, p12, p12, px1) and transmission keys (k11r, kr) for each medium identifier;
a device (33) configured to read corresponding service right data (p11) from the storage device on the basis of a medium identifier received from the user terminal;
a device (33) configured to, when encrypted service right data (Enc(k11r, p11)) is received from the user terminal, decrypt the encrypted service right data by the transmission key (k11r) in the storage device;
a collating device (33) configured to collate the service right data (p11) obtained by the decrypting with corresponding service right data (p11) in the storage device (31); and
a device (33) configured to, when the both are the same as a result of the collation, permit an access of the user terminal on the basis of the service right data.

20. A login system to log in to a service provider apparatus from a user terminal which detachably holds a secure storage medium having a medium identifier stored therein, **characterized in that**
the secure storage medium (SD) comprises:

a key area (2) in which a service cipher key (k11) corresponding to a medium identifier (SD-ID01) is stored; and
a data area (3) in which encrypted function designating data (Enc (k11, $(a_2 \| a_1 \| a_0)$)) obtained by encrypting latest function designating data ($a_2 \| a_1 \| a_0$) by means of the service cipher key are stored,
the user terminal (10) comprises:

a device (11, 14) configured to read a medium identifier from the secure storage medium at the time of the login;
a device (14) configured to transmit the read medium identifier and a login request to the service provider apparatus (30);
a device (14) configured to receive encrypted time login information (Enc(k11, t0)) and a service identifier from the service provider apparatus by the transmission;
a device (11, 14) configured to read a service cipher key and the encrypted function designating data on from the secure storage medium on the basis of the service identifier;

a device (14) configured to decrypt the encrypted function designating data and the encrypted time login information on the basis of the service cipher key;

a device (14) configured to calculate a first function value (FA(t0)) by substituting the decrypted time login information (t0) for a function (FA(t)) obtained from the decrypted function designating data $(a_2\|a_1\|a_0)$;

a device (14) configured to transmit the first function value to the service provider apparatus (30); and

a device (14) configured to terminate the login when an access is permitted from the service provider apparatus by the transmission, and

the service provider apparatus comprises:

a storage device (31) in which service cipher key (k11) corresponding to a service identifier and function designating data $(a_2\|a_1\|a_0)$ are stored so as to be associated with each other for each medium identifier;

a device (33) configured to, when a medium identifier and a login request are received from the user terminal, read service identifier corresponding to the medium identifier, service cipher key, and function designating data with reference to the storage device;

a device (33) configured to calculate a second function value (FA(t0)) by substituting time login information (t0) associated with a clock time when the login request is received for a function (FA(t)) obtained from the function designating data $(a_2\|a_1\|a_0)$;

a device (33) configured to encrypt the time login information (t0) by the service cipher key (k11);

a device (33) configured to send back the encrypted time login information (Enc(k11, t0)) obtained by the encrypting and the read service identifier to the user terminal;

a collating device (33) configured to, when a first function value (FA(t0)) is received from the user terminal, collate the first function value and the second function value (FA(t0)); and

a device (33) configured to, when the both are the same as a result of the collation, permit an access of the user terminal.

**21.** A login method to log in to a service provider apparatus from a user terminal which detachably holds a secure storage medium having a medium identifier stored therein, the method **characterized by** comprising:

storing service right data so as to be associated with each medium identifier in a storage device (31) by the service provider apparatus;

storing service cipher keys (k11, k12, k1x) issued on the basis of the medium identifier (SD-ID01) by the secure storage medium (SD);

storing encrypted service right data (Enc(k11, p11), Enc(k11, p12), Enc(k12, p21), Enc (k1x, px1)) obtained by encrypting service right data (p11, p12, p12, px1) by means of the service cipher keys, by the secure storage medium;

reading a medium identifier from the secure storage medium at the time of the login, by the user terminal (10);

transmitting the read medium identifier and a login request to the service provider apparatus (30) by the user terminal;

reading service right data corresponding to the medium identifier from the storage device by the service provider apparatus when a medium identifier and a login request are received from the user terminal;

reading a service cipher key and the encrypted service right data from the secure storage medium on the basis of the transmission of the medium identifier and the login request by the user terminal;

decrypting the encrypted service right data on the basis of the service cipher key by the user terminal;

transmitting the decrypted service right data to the service provider apparatus by the user terminal;

collating the service right data with the read service right data by the service provider apparatus when service right data is received from the user terminal;

permitting an access of the user terminal on the basis of the service right data by the service provider apparatus when the both are the same as a result of the collation; and

terminating the login by the user terminal when an access is permitted by the service provider apparatus.

FIG.1

Service DB table T1

| SD-ID | ku1 | ku2 | · · · | kux |
|---|---|---|---|---|
| SD-ID01 | k11 | k12 | · · · | k1x |
| SD-ID02 | k21 | k22 | · · · | k2x |
| SD-ID03 | k31 | k32 | · · · | k3x |
| · · · | · · · | · · · | · · · | · · · |
| SD-IDxx | kx1 | kx2 | · · · | kxx |
| Service ID | ID1 | ID2 | · · · | IDx |

FIG. 2

Right DB table T2

| kui | Right data | | | |
|---|---|---|---|---|
| k11 | p11 | p12 | · · · | p1x |
| k12 | p21 | p22 | · · · | p2x |
| k13 | p31 | p32 | · · · | p3x |
| · · · | · · · | · · · | · · · | · · · |
| k1x | px1 | px2 | · · · | pxx |

FIG. 3

FIG. 4

Personal identification number table T3

| SD-ID | User names | Personal identification numbers |
|-------|-----------|--------------------------------|
| SD-ID01 | User Y1 | * * * * |
| SD-ID02 | User Y2 | * * * * |
| SD-ID03 | User Y3 | * * * * |
| ... | ... | ... |
| SD-IDxx | User Yx | * * * * |

FIG. 5

Initialization (1)

Secure storage medium SD    User terminal 10    License center apparatus 20    Service provider apparatus 30

SD-ID
ST1    ST2    SD-ID
VPN or the like
SD-ID, k11
ST3
k11
ST4
ST5    k11

FIG. 6

Initialization (2)

L
License center
Secure storage medium SD-ID, k11 ~SD
Delivery
ST11
U
User's home
ST12
Secure storage medium SD-ID, k11 ~SD
Transmission
P
Service provider

FIG. 7

FIG. 8

EP 1 744 251 A1

(Right data issuing side) 30

**Service provider apparatus**

31 T3

Personal identification number table

Service DB table

32

Service management unit

T1

Access control unit ~33

Service providing unit ~34

**License center apparatus**

20

21

T1

Service DB table

22 License management unit

Initialization Completion

Secure storage medium SD

System area

SD-ID01 4

Protected area

ku1: k11

Encryption/ decryption unit

User data area

I/F

Initialization unit

12

Login unit

13

Service utilizing unit

14

11

User terminal ~10

F I G. 9

Right data delivery (1)

Secure storage
medium SD          User terminal 10

License center
apparatus 20

Service provider
apparatus 30

ST21 — SD-ID →

SD-ID →

ST23
Issue right data p11

ST22

SD-ID, p11 →

Enc(k11, p11)          Enc(k11, p11)

ST24

ST26          ST25

F I G. 10

Right data delivery (2)

Secure storage
medium SD          User terminal 10

Service provider
apparatus 30

ST21 — SD-ID →

SD-ID → ST22a

ST23a
Issue right
data p11

Enc(k11, p11)          Enc(k11, p11)

ST26          ST25a

F I G. 11

FIG. 12

FIG. 13

EP 1 744 251 A1

FIG. 14

Secure storage medium <u>SD</u>

Example of transmission key kr (1)

System area

SD−ID01

To have k11r for each k11

Protected area
  ku1: k11, k11r
  ku2: k12, k12r
  kux: k1x, k1xr

Encryption/
decryption
unit

User data area
  Enc(k11, p11)
  Enc(k11, p12)
  Enc(k12, p21)
  Enc(k1x, px1)

FIG. 15

Secure storage medium <u>SD</u>

Example of transmission key kr (2)

System area

SD−ID01

To have one kr for each
storage medium

Protected area    kr
  ku1: k11
  ku2: k12
  kux: k1x

Encryption/
decryption
unit

User data area
  Enc(k11, p11)
  Enc(k11, p12)
  Enc(k12, p21)
  Enc(k1x, px1)

FIG. 16

Secure storage medium SD

System area
SD-ID01

Protected area
ku1: k11, $\overline{k11}$
ku2: k12, $\overline{k12}$
kux: k1x, $\overline{k1x}$

Encryption/
decryption
unit

User data area
Enc(k11, p11)
Enc(k11, p12)
Enc(k12, p21)
Enc(k1x, px1)

Example of transmission key kr (3)

To have $\overline{k11}$ for each k11

FIG. 17

Service DB table T1ra

| SD-ID | ku1 | ku2 | ··· | kux |
|-------|-----|-----|-----|-----|
| SD-ID01 | k11, k11r | k12, k12r | ··· | k1x, k1xr |
| SD-ID02 | k21, k21r | k22, k22r | ··· | k2x, k2xr |
| SD-ID03 | k31, k31r | k32, k32r | ··· | k3x, k3xr |
| ··· | ··· | ··· | ··· | ··· |
| SD-IDxx | kx1, kx1r | kx2, kx2r | ··· | kxx, kxxr |
| Service ID | ID1 | ID2 | ··· | IDx |

FIG. 18

Service DB table T1rb

| SD-ID | kr | ku1 | ku2 | ··· | kux |
|-------|-----|-----|-----|-----|-----|
| SD-ID01 | k1r | k11 | k12 | ··· | k1x |
| SD-ID02 | k2r | k21 | k22 | ··· | k2x |
| SD-ID03 | k3r | k31 | k32 | ··· | k3x |
| ··· | ··· | ··· | ··· | ··· | ··· |
| SD-IDxx | kxr | kx1 | kx2 | ··· | kxx |
| Service ID | | ID1 | ID2 | ··· | IDx |

FIG. 19

Service DB table T1rc

| SD−ID | ku1 | ku2 | · · · | kux |
|---|---|---|---|---|
| SD−ID01 | k11, $\overline{k11}$ | k12, $\overline{k12}$ | · · · | k1x, $\overline{k1x}$ |
| SD−ID02 | k21, $\overline{k21}$ | k22, $\overline{k22}$ | · · · | k2x, $\overline{k2x}$ |
| SD−ID03 | k31, $\overline{k31}$ | k32, $\overline{k32}$ | · · · | k3x, $\overline{k3x}$ |
| · · · | · · · | · · · | · · · | · · · |
| SD−IDxx | kx1, $\overline{kx1}$ | kx2, $\overline{kx2}$ | · · · | kxx, $\overline{kxx}$ |
| Service ID | ID1 | ID2 | · · · | IDx |

F I G. 20

Login processing (transmission key k11r)

| Secure storage<br>medium SD | User terminal 10 | Service provider<br>apparatus 30 |

ST31 — SD—ID →

SD—ID, Login request → ST32

ST34 — Service ID ← Service ID ←
ST33

ST35 — Authentication/<br>sharing key ks

Encrypt k11 — Enc(ks, k11)<br>Enc(k11, p11)

ST36 — → ST38 — Decrypt k11

ST37 — ST39 — Decrypt p11

ST40a

Encrypt k11r — Enc(ks, k11r) →

ST40a—1 — ST40a—3 — Decrypt k11r

Processing according to<br>transmission key k11r

ST40a—4 — Encrypt p11

Encrypted right data Enc(k11r, p11) → ST40a—6

ST40a—2 — ST40a—5

Decrypt p11

Give notice of access permit/denied ← Determine whether p11<br>is valid or not

ST42

ST41

F I G. 21

Secure storage medium SD

System area

SD−ID01

Protected area

ku1: k11
ku2: k12

Encryption/
decryption
unit

User data area

$Enc(k11, (a_2 \| a_1 \| a_0))$
$Enc(k12, (b_2 \| b_1 \| b_0))$

Store respective
coefficients of
FA(t), FB(t)

It is possible to
designate FA(t), FB(t)
by respective coefficients

Password functions
FA(t), FB(t) of clock
time information t

$FA(t) = a_2t^2 + a_1t + a_0$

$FB(t) = b_2t^2 + b_1t + b_0$

FIG. 22

Right DB table
T2f

| ku1 | Right data | | ... | |
|-----|-----|-----|-----|-----|
| k11 | $a_2 \| a_1 \| a_0$ | $a'_2 \| a'_1 \| a'_0$ | ... | $a''_2 \| a''_1 \| a''_0$ |
| k12 | $b_2 \| b_1 \| b_0$ | $b'_2 \| b'_1 \| b'_0$ | ... | $b''_2 \| b''_1 \| b''_0$ |
| k13 | $c_2 \| c_1 \| c_0$ | $c'_2 \| c'_1 \| c'_0$ | ... | $c''_2 \| c''_1 \| c''_0$ |
| ... | ... | ... | ... | ... |
| k1x | $x_2 \| x_1 \| x_0$ | $x'_2 \| x'_1 \| x'_0$ | ... | $x''_2 \| x''_1 \| x''_0$ |

FIG. 23

Function designating data delivery

Secure storage
medium SD

User terminal 10

License center
apparatus 20

Service provider
apparatus 30

SD−ID

ST21

SD−ID

ST22

SD−ID

ST23f

Issue FA(t)
SD−ID,
$(a_2 \| a_1 \| a_0)$

ST24f

$Enc(k11, (a_2 \| a_1 \| a_0))$

ST25f

$Enc(k11, (a_2 \| a_1 \| a_0))$

ST26f

FIG. 24

F I G. 25

$$\text{Login processing}$$

| Secure storage medium SD | User terminal 10 | Service provider apparatus 30 |
|---|---|---|

ST31 — SD-ID →

SD-ID, Login request → ST32

Service ID, Enc(k11, t0) ← ST33f

ST34 — ← Service ID

ST35 — Authentication/ sharing key ks

Decrypt k11

ST36 — Enc(ks, p11)
Enc(k11,($a_2 \parallel a_1 \parallel a_0$))

ST37

Decrypt k11

ST38 — Decrypt($a_2 \parallel a_1 \parallel a_0$)

ST39f — Decrypt t0

ST40f-1 — Calculate value of FA(t0)

ST40f-2

ST40f-3 — Value of FA(t0) → ST41f

ST42 — Give notice of access permit/denied ← Determine whether value of FA(t0) is valid or not

F I G. 26

F I G. 27

Service DB table T1x

| SD—ID | ku1 |
|---|---|
| SD—ID01 | k11 |
| SD—ID02 | k21 |
| SD—ID03 | k31 |
| . . . | . . . |
| SD—IDxx | kx1 |

FIG. 28

Login processing

FIG. 29

Service DB table T1rax

| SD—ID | ku1 |
|---|---|
| SD—ID01 | k11, k11r |
| SD—ID02 | k21, k21r |
| SD—ID03 | k31, k31r |
| . . . | . . . |
| SD—IDxx | kx1, kx1r |

FIG. 30

Service DB table T1rbx

| SD–ID | kr | ku1 |
|---|---|---|
| SD–ID01 | k1r | k11 |
| SD–ID02 | k2r | k21 |
| SD–ID03 | k3r | k31 |
| . . . | . . . | . . . |
| SD–IDxx | kxr | kx1 |

# F I G. 31

Service DB table T1rcx

| SD–ID | ku1 |
|---|---|
| SD–ID01 | k11, $\overline{k11}$ |
| SD–ID02 | k21, $\overline{k21}$ |
| SD–ID03 | k31, $\overline{k31}$ |
| . . . | . . . |
| SD–IDxx | kx1, $\overline{kx1}$ |

# F I G. 32

Login processing (transmission key k11r)

Secure storage medium SD | User terminal 10 | Service provider apparatus 30

ST31 — SD-ID →
ST32 — SD-ID, Login request (Password) →

← Authentication permit for password
ST33x

ST35 — Authentication/ sharing key ks

Encrypt k11 — Enc(ks, k11)
Enc(k11, p11)
ST36 →
ST38 — Decrypt k11
ST37 — ST39 — Decrypt p11

ST40a
Processing according to transmission key k11r

Encrypt k11r — Enc(ks, k11r) →
ST40a-1
ST40a-3 — Decrypt k11r
ST40a-4 — Encrypt p11
ST40a-2
Encrypted right data Enc(k11r, p11) →
ST40a-5
ST40a-6
Decrypt p11

← Give notice of access permit/denied
Determine whether p11 is valid or not
ST42
ST41

F I G. 33

EP 1 744 251 A1

$$\text{Login processing}$$

Secure storage
medium SD       User terminal 10       Service provider
apparatus 30

ST31 — SD—ID →

SD—ID, Login request (Password)   ST32 →

Authentication permit for password, $Enc(k11, t0)$ ←

ST35 — Authentication/
sharing key ks ↔

ST33xf

Decrypt k11 —

ST36 — $Enc(ks, p11)$
$Enc(k11, (a_2 \,\|\, a_1 \,\|\, a_0))$ →

ST37f

Decrypt k11

ST38 — Decrypt$(a_2 \,\|\, a_1 \,\|\, a_0)$

ST39f — Decrypt t0

ST40f—1 — Calculate value of $FA(t0)$

ST40f—2 —

ST41f

ST40f—3 — Value of $FA(t0)$ →

Determine whether
value of $FA(t0)$ is
valid or not

ST42 — Give notice of access permit/denied ←

F I G. 34

EP 1 744 251 A1

## INTERNATIONAL SEARCH REPORT

| | International application No. |
|---|---|
| | PCT/JP2005/005384 |

A. CLASSIFICATION OF SUBJECT MATTER
Int.Cl$^7$ G06F15/00, G06K17/00, 19/10, H04L9/10, 9/32

According to International Patent Classification (IPC) or to both national classification and IPC

B. FIELDS SEARCHED

Minimum documentation searched (classification system followed by classification symbols)
Int.Cl$^7$ G06F15/00, G06K17/00, 19/10, H04L9/10, 9/32

Documentation searched other than minimum documentation to the extent that such documents are included in the fields searched
Jitsuyo Shinan Koho          1922-1996   Jitsuyo Shinan Toroku Koho   1996-2005
Kokai Jitsuyo Shinan Koho    1971-2005   Toroku Jitsuyo Shinan Koho   1994-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2003-162691 A (Sony Corp.), 06 June, 2003 (06.06.03), Full text; all drawings (Family: none) | 1-21 |
| A | JP 2003-178034 A (Dainippon Printing Co., Ltd.), 27 June, 2003 (27.06.03), Full text; all drawings (Family: none) | 1-21 |
| A | Toshiba Corp., "SD Card o Riyo shita Digital Chosakuken Hogo Gijutsu no Kaihatsu ni Tsuite", [online], 17 July, 2003 (17.07.03), Toshiba Corp., [retrieval date 17 June, 2005 (17.06.05)], Internet, <URL: http://www.toshiba.co.jp/about/press/2003_07/pr_j1702.htm> | 1-21 |

☐ Further documents are listed in the continuation of Box C.      ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 17 June, 2005 (17.06.05) | 12 July, 2005 (12.07.05) |

| Name and mailing address of the ISA/ | Authorized officer |
|---|---|
| Japanese Patent Office | |
| Facsimile No. | Telephone No. |

Form PCT/ISA/210 (second sheet) (January 2004)